# EUROPEAN PATENT APPLICATION

(11) **EP 4 465 574 A1**
(43) Date of publication of application: **20.11.2024**
(21) Application number: 23740045.2
(22) Date of filing: 11.01.2023
(51) Int. Cl.: H04L 5/00, H04W 72/04

(54) **PUSCH TRANSMISSION METHOD AND APPARATUS AND STORAGE MEDIUM**

(30) Priority: 11.01.2022 CN 202210029082
(71) Applicant: Datang Mobile Communications Equipment Co., Ltd., Beijing 100085 (CN)
(72) Inventor: HUANG, Qiuping, Beijing 100085 (CN)
(74) Representative: Studio Torta S.p.A.
(86) International application number: PCT/CN2023/071776
(87) International publication number: WO 2023/134703

(57) **Abstract**

Provided in the embodiments of the disclosure are a PUSCH transmission method and apparatus and a storage medium. The method comprises: on the basis of a first SRS resource set configured by means of first parameters and/or a second SRS resource set configured by means of second parameters, determining a target SRS resource set, the target SRS resource set being one or more SRS resource sets corresponding to a PUSCH; and transmitting the PUSCH on the basis of the target SRS resource set. In the embodiments of the present disclosure, one or more SRS resource sets corresponding to a PUSCH are determined on the basis of the first SRS resource set configured by means of the first parameters and/or the second SRS resource set configured by means of the second parameters, so that when a PUSCH scheduled by DCI format0_1 can only be transmitted in an S-TRP manner, the PUSCH may perform M-TRP transmission.

## Description

### CROSS-REFERENCES TO RELATED APPLICATIONS

The present application claims priority to Chinese patent application No. 202210029082.7 filed on January 11, 2022, entitled "PUSCH Transmission Method and Apparatus and Storage Medium", which is hereby incorporated by reference in its entirety.

### FIELD

The present application relates to the field of communication, and in particular, to methods and apparatuses for physical uplink shared channel (PUSCH) transmission and a storage medium.

### BACKGROUND

In radio communication systems, physical uplink shared channel (PUSCH) transmission may be scheduled by downlink control information (DCI) or configured grant based on semi-static signaling. In the 3rd generation partnership project (3GPP) new radio (NR) system, DCI format 0_0, DCI format 0_1 and DCI format 0_2 may all be used to schedule the PUSCH transmission.

In a multiple-transmission and reception point (M-TRP) scenario, when PUSCH is configured as M-TRP transmission, and PUSCH scheduled by the DCI format corresponding to the PUSCH is configured as single-transmission and reception point (S-TRP) transmission, M-TRP PUSCH transmission cannot be performed since a network device only configures one sounding reference signal (SRS) resource set for the PUSCH scheduled by the DCI format.

### BRIEF SUMMARY

In view of the problems above, embodiments of the present application provide methods and apparatuses for physical uplink shared channel (PUSCH) transmission and a storage medium.

An embodiment of the present application provides a method for PUSCH transmission, including:
determining a target sounding reference signal (SRS) resource set based on a first SRS resource set configured by a first parameter and/or a second SRS resource set configured by a second parameter, where the target SRS resource set is one or more SRS resource sets corresponding to a PUSCH; and
transmitting the PUSCH based on the target SRS resource set.

In an embodiment, the PUSCH satisfies a first condition, and the first condition includes that:
the PUSCH is configured with target information, where the target information is used for indicating at least one of the following items:
a transmission or reception mode of the PUSCH;
the PUSCH being associated with multiple-transmission and reception points (M-TRPs);
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator (TCI) states; or
a second group of TCI states associated with the PUSCH.

In an embodiment, determining the target SRS resource set based on the first SRS resource set configured by the first parameter and/or the second SRS resource set configured by the second parameter includes at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
where N is an integer equal to or greater than 2.

In an embodiment, determining the target SRS resource set based on the first SRS resource set configured by the first parameter and/or the second SRS resource set configured by the second parameter includes at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
where M is an integer equal to or greater than 2.

In an embodiment, determining the target SRS resource set based on the first SRS resource set configured by the first parameter and/or the second SRS resource set configured by the second parameter includes:
determining the target SRS resource set based on the first SRS resource set.

In an embodiment, the method further includes:
determining a number of a third parameter corresponding to the PUSCH, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

In an embodiment, determining the target SRS resource set based on the first SRS resource set configured by the first parameter and/or the second SRS resource set configured by the second parameter includes:
determining the target SRS resource set based on the first SRS resource set and/or the second SRS resource set, and the number of the third parameters.

In an embodiment, the number of the third parameters is X, and determining the target SRS resource set based on the first SRS resource set and/or the second SRS resource set, and the number of the third parameters includes at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
where X is an integer equal to or greater than 2.

In an embodiment, the number of the third parameters is Y, and determining the target SRS resource set based on the first SRS resource set and/or the second SRS resource set, and the number of the third parameters includes at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set including part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
where Y is an integer equal to or greater than 2.

In an embodiment, the number of the third parameters is 1, and determining the target SRS resource set based on the first SRS resource set and/or the second SRS resource set, and the number of the third parameters includes:
determining the target SRS resource set to be one SRS resource set satisfying a preset condition in the first SRS resource set.

In an embodiment, the power control parameter includes at least one of the following items:
a parameter used for indicating a path loss reference signal;
a power control parameter *p0;* or
a path loss compensation factor *alpha.*

In an embodiment, the first SRS resource set is an SRS resource set corresponding to a downlink control information (DCI) format DCI format 0_1; and/or
the second SRS resource set is an SRS resource set corresponding to DCI format 0_2.

In an embodiment, the method further includes:
determining a maximum number of layers corresponding to the PUSCH based on a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the method further includes:
determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, the first indication parameter is used for indicating an SRS resource corresponding to the PUSCH, and the second indication parameter is used for indicating precoding and/or number of layers corresponding to the PUSCH.

In an embodiment, the method further includes:
determining a bit width and/or an encoding mode of a first indication parameter based on a number of SRS resources in the target SRS resource set, where the first indication parameter is used for indicating an SRS resource corresponding to the PUSCH.

In an embodiment, the target SRS resource set is a set including SRS resources corresponding to a transmission procedure of the PUSCH.

In an embodiment, the first SRS resource set and/or the second SRS resource set are SRS resource sets corresponding to a transmission mode of the PUSCH.

An embodiment of the present application further provides a method for PUSCH transmission, including:
transmitting sounding reference signal (SRS) resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

In an embodiment, the method further includes:
configuring target information for the PUSCH, where the target information is used for indicating at least one of the following items:
a transmission or reception mode of the PUSCH;
the PUSCH being associated with multiple-transmission and reception points (M-TRPs);
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator (TCI) state; or
a second group of TCI states associated with the PUSCH.

In an embodiment, the correspondence exists between the target SRS resource set and the first SRS resource set configured by the first parameter and/or the second SRS resource set configured by the second parameter includes at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
where M is an integer equal to or greater than 2.

In an embodiment, the correspondence exists between the target SRS resource set and the first SRS resource set configured by the first parameter and/or the second SRS resource set configured by the second parameter includes:
in case that the network device does not configure target information for the PUSCH, the target SRS resource set including all or part of SRS resource sets in the first SRS resource set;
the target information is used for indicating at least one of the following items:
   a transmission or reception mode of the PUSCH;
   the PUSCH being associated with M-TRPs;
   the PUSCH being associated with multiple precoding and/or number of layers;
   second precoding and/or number of layers associated with the PUSCH;
   the PUSCH being associated with multiple groups of SRS resources;
   a second group of SRS resources associated with the PUSCH;
   the PUSCH being associated with multiple groups of power control parameters;
   a second group of power control parameters associated with the PUSCH;
   the PUSCH being associated with multiple *SpatialRelationInfo* parameters;
   a second group of *SpatialRelationInfo* parameters associated with the PUSCH;
   the PUSCH being associated with multiple TCI states; or
   a second group of TCI states associated with the PUSCH.

In an embodiment, the correspondence exists between the target SRS resource set and the first SRS resource set configured by the first parameter and/or the second SRS resource set configured by the second parameter includes:
the correspondence exists between the target SRS resource set and the first SRS resource set and/or the second SRS resource set, and a third parameter, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

In an embodiment, a number of the third parameter is Y, the correspondence exists between the target SRS resource set and the first SRS resource set configured by the first parameter and/or the second SRS resource set configured by the second parameter includes at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set including part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
where Y is an integer equal to or greater than 2.

In an embodiment, a number of the third parameter is 1, the correspondence exists between the target SRS resource set and the first SRS resource set configured by the first parameter and/or the second SRS resource set configured by the second parameter includes:
the target SRS resource set being one SRS resource set satisfying a preset condition in the first SRS resource set.

In an embodiment, the first SRS resource set is an SRS resource set corresponding to a downlink control information (DCI) format DCI format 0_1; and/or
the second SRS resource set is an SRS resource set corresponding to DCI format 0_2.

In an embodiment, a maximum number of layers corresponding to the PUSCH is a maximum number of layers indicated by a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

In an embodiment, a bit width and/or an encoding mode of the SRS resource indication information is determined based on a number of SRS resources in the target SRS resource set.

An embodiment of the present application further provides a terminal device, including a memory, a transceiver and a processor,
where the memory is used for storing a computer program; the transceiver is used for transmitting and receiving data under control of the processor; and the processor is used for reading the computer program in the memory and performing steps of the method for PUSCH transmission applied to the terminal device described above.

An embodiment of the present application further provides a network device, including a memory, a transceiver and a processor,
where the memory is used for storing a computer program; the transceiver is used for transmitting and receiving data under control of the processor; and the processor is used for reading the computer program in the memory and performing steps of the method for PUSCH transmission applied to the network device described above.

An embodiment of the present application further provides an apparatus for PUSCH transmission, including:
a first determining unit, used for determining a target sounding reference signal (SRS) resource set based on a first SRS resource set configured by a first parameter and/or a second SRS resource set configured by a second parameter, where the target SRS resource set is one or more SRS resource sets corresponding to a PUSCH; and
transmitting the PUSCH based on the target SRS resource set.

In an embodiment, the first determining unit is further used for at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
where N is an integer equal to or greater than 2.

In an embodiment, the first determining unit is further used for at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
where M is an integer equal to or greater than 2.

In an embodiment, the first determining unit is further used for:
determining the target SRS resource set based on the first SRS resource set.

In an embodiment, the apparatus further includes:
a second determining unit, used for determining a number of a third parameter corresponding to the PUSCH, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

In an embodiment, the first determining unit is further used for:
determining the target SRS resource set based on the first SRS resource set and/or the second SRS resource set, and the number of the third parameters.

In an embodiment, the number of the third parameters is X, and the first determining unit is further used for at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
where X is an integer equal to or greater than 2.

In an embodiment, the number of the third parameters is Y, and the first determining unit is further used for at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set including part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
where Y is an integer equal to or greater than 2.

In an embodiment, the number of the third parameters is 1, and the first determining unit is further used for:
determining the target SRS resource set to be one SRS resource set satisfying a preset condition in the first SRS resource set.

In an embodiment, the power control parameter includes at least one of the following items:
a parameter used for indicating a path loss reference signal;
a power control parameter *p0;* or
a path loss compensation factor *alpha.*

In an embodiment, the first SRS resource set is an SRS resource set corresponding to a downlink control information (DCI) format DCI format 0_1; and/or
the second SRS resource set is an SRS resource set corresponding to DCI format 0_2.

In an embodiment, the apparatus further includes:
a third determining unit, used for determining a maximum number of layers corresponding to the PUSCH based on a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the apparatus further includes:
a fourth determining unit, used for determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, the first indication parameter is used for indicating an SRS resource corresponding to the PUSCH, and the second indication parameter is used for indicating precoding and/or number of layers corresponding to the PUSCH.

In an embodiment, the apparatus further includes:
a fifth determining unit, used for determining a bit width and/or an encoding mode of a first indication parameter based on a number of SRS resources in the target SRS resource set, where the first indication parameter is used for indicating an SRS resource corresponding to the PUSCH.

In an embodiment, the target SRS resource set is a set including SRS resources corresponding to a transmission procedure of the PUSCH.

In an embodiment, the first SRS resource set and/or the second SRS resource set are SRS resource sets corresponding to a transmission mode of the PUSCH.

An embodiment of the present application further provides an apparatus for PUSCH transmission, including:
a transmitting unit, used for transmitting SRS resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

In an embodiment, the apparatus further includes:
a configuring unit, used for configuring target information for the PUSCH, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, the correspondence exists between the target SRS resource set and the first SRS resource set configured by the first parameter and/or the second SRS resource set configured by the second parameter includes at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
where M is an integer equal to or greater than 2.

In an embodiment, the correspondence exists between the target SRS resource set and the first SRS resource set configured by the first parameter and/or the second SRS resource set configured by the second parameter includes:
in case that the network device does not configure target information for the PUSCH, the target SRS resource set including all or part of SRS resource sets in the first SRS resource set;
the target information is used for indicating at least one of the following items:
   a transmission or reception mode of the PUSCH;
   the PUSCH being associated with M-TRPs;
   the PUSCH being associated with multiple precoding and/or number of layers;
   second precoding and/or number of layers associated with the PUSCH;
   the PUSCH being associated with multiple groups of SRS resources;
   a second group of SRS resources associated with the PUSCH;
   the PUSCH being associated with multiple groups of power control parameters;
   a second group of power control parameters associated with the PUSCH;
   the PUSCH being associated with multiple *SpatialRelationInfo* parameters;
   a second group of *SpatialRelationInfo* parameters associated with the PUSCH;
   the PUSCH being associated with multiple TCI states; or
   a second group of TCI states associated with the PUSCH.

In an embodiment, the correspondence exists between the target SRS resource set and the first SRS resource set configured by the first parameter and/or the second SRS resource set configured by the second parameter includes:
the correspondence exists between the target SRS resource set and the first SRS resource set and/or the second SRS resource set, and a third parameter, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

In an embodiment, the number of the third parameters is Y, the correspondence exists between the target SRS resource set and the first SRS resource set configured by the first parameter and/or the second SRS resource set configured by the second parameter includes at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set including part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
where Y is an integer equal to or greater than 2.

In an embodiment, the number of the third parameters is 1, the correspondence exists between the target SRS resource set and the first SRS resource set configured by the first parameter and/or the second SRS resource set configured by the second parameter includes:
the target SRS resource set being one SRS resource set satisfying a preset condition in the first SRS resource set.

In an embodiment, the first SRS resource set is an SRS resource set corresponding to a downlink control information (DCI) format DCI format 0_1; and/or
the second SRS resource set is an SRS resource set corresponding to DCI format 0_2.

In an embodiment, a maximum number of layers corresponding to the PUSCH is a maximum number of layers indicated by a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

In an embodiment, a bit width and/or an encoding mode of the SRS resource indication information is determined based on a number of SRS resources in the target SRS resource set.

An embodiment of the present application further provides a processor-readable storage medium storing a computer program that causes a processor to perform the steps of the method for PUSCH transmission described above.

An embodiment of the present application further provides a computer-readable storage medium storing a computer program that causes a computer to perform the steps of the method for PUSCH transmission described above.

An embodiment of the present application further provides a communication device-readable storage medium storing a computer program that causes a communication device to perform the steps of the method for PUSCH transmission described above.

An embodiment of the present application further provides a chip product-readable storage medium storing a computer program that causes a chip product to perform the steps of the method for PUSCH transmission described above.

In the methods and apparatuses for PUSCH transmission and the storage medium provided by the embodiments of the present application, the terminal device determines one or more SRS resource sets corresponding to the PUSCH based on the first SRS resource set configured by the first parameter and/or the second SRS resource set configured by the second parameter. As such, when the PUSCH scheduled by DCI format 0_1 is only configured as S-TRP transmission, the M-TRP transmission for the PUSCH may still be performed.

### BRIEF DESCRIPTION OF THE DRAWINGS

In order to more clearly illustrate solutions disclosed in the embodiments of the present application, the drawings used in the descriptions of the embodiments are briefly described below. The drawings in the following description are only some embodiments of the present application, and other drawings may be obtained according to these drawings without any creative work for those skilled in the art.
FIG. 1 is a first schematic flowchart of a method for physical uplink shared channel (PUSCH) transmission according to an embodiment of the present application;
FIG. 2 is a second schematic flowchart of a method for PUSCH transmission according to an embodiment of the present application;
FIG. 3 is a schematic structural diagram of a terminal device according to an embodiment of the present application; and
FIG. 4 is a schematic structural diagram of a network device according to an embodiment of the present application.
FIG. 5 is a first schematic structural diagram of an apparatus for PUSCH transmission according to an embodiment of the present application; and
FIG. 6 is a second schematic structural diagram of an apparatus for PUSCH transmission according to an embodiment of the present application.

### DETAILED DESCRIPTION

In order to clearly describe solutions in the embodiments of the present application, relevant knowledge is introduced below.

### (1) Physical uplink shared channel (PUSCH) transmission

In a radio communication system, a PUSCH transmission may be scheduled by downlink control information (DCI) or configured grant based on semi-static signaling. The configured grant based on semi-static signaling is also referred to as configured grant, scheduling-free, grant-free, scheduling-free and grant-free, without dynamic grant, etc. Configured grant PUSCH based on semi-static signaling is also referred to as configured grant (CG) PUSCH, grant-less/grant-free PUSCH, scheduling-free PUSCH, and scheduling-grant-free PUSCH, PUSCH uplink transmission without dynamic grant, etc.

### (2) PUSCH transmission scheme

In the 3rd generation partnership project (3GPP) new radio (NR) system, DCI format 0_0, DCI format 0_1 and DCI format 0_2 may all be used to schedule PUSCH transmission. For a configured grant PUSCH, it is referred to as CG PUSCH below for convenience of description. CG PUSCH includes two grant schemes: Type 1 and Type 2. Actual uplink grant corresponding to the Type 1 scheme is provided by radio resource control (RRC) signaling, and the actual uplink grant corresponding to the Type 2 scheme is provided by the physical downlink control channel (PDCCH).

### (3) PUSCH transmission mode

Two transmission modes are supported for PUSCH: codebook-based transmission and non-codebook based transmission. PUSCH transmission is configured as codebook based transmission when a parameter *txConfig* in a PUSCH-Config information element (PUSCH-Config IE) is configured as "codebook"; or the PUSCH transmission is configured as non-codebook based transmission when the parameter *txConfig* in the PUSCH-Config IE is configured as "nonCodebook". If the higher layer parameter *txConfig* is not configured, the PUSCH transmission is not expected to be scheduled by DCI format 0_1.

### (4) PUSCH transmission parameters

The network device may configure the field *precodingAndNumberOfLayers* for CG Type 1 PUSCH by a RRC signaling, which is used for indicating precoding and/or number of layers corresponding to CG Type 1 PUSCH transmission; and may configure field *srs-ResourceIndicator,* which is used for indicating sounding reference signal (SRS) resources corresponding to CG Type 1 PUSCH transmission.

### (5) PUSCH time domain allocation list

3GPP TS 38.214 provides the PUSCH time domain allocation list (TDRA). When a field *pusch-TimeDomainAllocationListDCI-0-1* is not configured, the field *pusch-TimeDomainAllocationList* is applicable for DCI format 0_0 and DCI format 0_1. The field *pusch-TimeDomainAllocationListDCI-0-2-r16* or *pusch-TimeDomainAllocationListDCI-0-1-r16* or *pusch-TimeDomainAllocationListForMultiPUSCH-r16* and the field *pusch-TimeDomainAllocationList* will not be configured by the network simultaneously.

### (6) Procedure for determining the PUSCH transmission parameters

The network device configures corresponding SRS resource sets by RRC signaling for the PUSCH scheduled by DCI format 0_1 and DCI format 0_2. CG Type 1 PUSCH uses the SRS resource set configured by the network device for the PUSCH scheduled by DCI format 0_1. After the SRS resource set corresponding to the CG Type 1 PUSCH is determined, the network device may indicate the SRS resources corresponding to the actual CG Type 1 PUSCH transmission in the SRS resource set, and the terminal device (for example, a user equipment, UE) determines the precoding and/or number of layers for CG Type 1 PUSCH transmission based on the SRS resources corresponding to the actual CG Type 1 PUSCH transmission.

In a multiple-transmission and reception point (M-TRP) scenario, when the CG Type 1 PUSCH is configured as M-TRP transmission and the PUSCH scheduled by DCI format 0_1 is configured as single-transmission and reception point (S-TRP) transmission, since the network device only configures one SRS resource set for the PUSCH scheduled by DCI format 0_1, the M-TRP transmission for the CG Type 1 PUSCH cannot be performed when the one SRS resource set is used as the SRS resource set corresponding to the CG Type 1 PUSCH. In the related art, the SRS resource set, the precoding and/or number of layers, and SRS resources for CG Type 1 PUSCH transmission in the M-TRP scenario cannot be determined.

In view of the above problems in the related art, embodiments of the present application provide methods and apparatuses for PUSCH transmission and a storage medium, the terminal device determines one or more SRS resource sets corresponding to the PUSCH based on a first SRS resource set configured by a first parameter and/or a second SRS resource set configured by a second parameter. As such, when the PUSCH scheduled by DCI format 0_1 is only configured as S-TRP transmission, the M-TRP transmission for the PUSCH may still be performed.

In the embodiments of the present application, the term "and/or" describes a related relationship of associated objects, and indicates that there may be three kinds of relationships. For example, A and/or B may represent that A exists alone, A and B exist simultaneously, and B exists alone. Character "j" generally indicates that the associated objects have an "or" relationship.

In the embodiment of the present application, the terms "first" and "second" are used to distinguish similar objects and are not used to describe a particular order or sequence.

"Determining B based on A" in the present application means that the factor A should be considered when B is determined. It is not limited to "determining B based on A alone", but also includes "determining B based on A and C", "determining B based on A, C and E", "determining C based on A, and further determining B based on C", etc. In addition, it may also include using A as a condition for determining B, for example, "when A satisfies a first condition, determining B using a first method", for another example, "when A satisfies a second condition, determining B", etc.; for still another example, "when A satisfies a third condition, determining B based on a first parameter" and so on. It may also be that A is used as a condition for determining a factor of B, for example, "when A satisfies the first condition, determining C using the first method, and further determining B based on C" and so on.

In the embodiments of the present application, the term "multiple" refers to two or more than two, and other quantifiers are similar.

Solutions provided by the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may also include a core network part, such as an evolved packet system (EPS), a 5G system (5GS), and the like.

The terminal device in the embodiments of the present application may be a device that provides voice and/or data connectivity to a user, a handheld device with a wireless connection function, or other processing device connected to a wireless modem. In different systems, the name of the terminal device may be different. For example, in the 5G system, the terminal device may be called as user equipment (UE). A wireless terminal device may communicate with one or more core networks (CN) via a radio access network (RAN), and the wireless terminal device may be a mobile terminal device, such as a mobile phone (or cellular phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device in the embodiments of the present application may be a base station, and the base station may include a plurality of cells providing services for the terminal device. Depending on the specific application, the base station may also be called an access point, or may be a device in the access network that communicates with wireless terminal device through one or more sectors on the air interface, or other names. Network device may be used to exchange received air frames with internet protocol (IP) packets, and act as a router between radio terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, the network device may include a centralized unit (CU) node and a distributed unit (DU) node, and the centralized unit and the distributed unit may be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

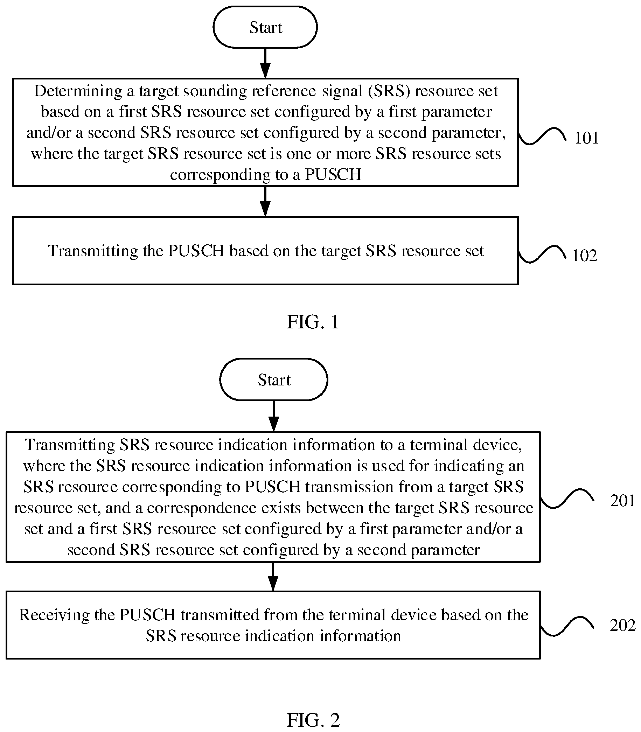

FIG. 1 is a first schematic flowchart of a method for physical uplink shared channel (PUSCH) transmission according to an embodiment of the present application. As shown in FIG. 1, the method for PUSCH transmission according to an embodiment of the present application may be performed by a terminal device (for example, a user equipment, UE). The method includes at least the following steps.

Step 101: determining a target sounding reference signal (SRS) resource set based on a first SRS resource set configured by a first parameter and/or a second SRS resource set configured by a second parameter, where the target SRS resource set is one or more SRS resource sets corresponding to a PUSCH.

Step 102: transmitting the PUSCH based on the target SRS resource set.

The terminal device determines the target SRS resource set based on the first SRS resource set configured by the first parameter and/or the second SRS resource set configured by the second parameter. The first parameter may be a higher layer parameter *srs-ResourceSetToAddModList,* and the second parameter may be a higher layer parameter *srs-ResourceSetToAddModListDCI-0-2.*

An SRS resource set configured by the network device for PUSCH scheduled by DCI format 0_1 is the first SRS resource set included in the first parameter *srs-ResourceSetToAddModList.* An SRS resource set configured by the network device for PUSCH scheduled by DCI format 0_2 is the second SRS resource set included in the second parameter *srs-ResourceSetToAddModListDCI-0-2.*

In case that the transmission or reception mode of PUSCH is S-TRP transmission, the target SRS resource set is one SRS resource set corresponding to the PUSCH. In case that the transmission or reception mode of PUSCH is M-TRP transmission, the target SRS resource set is multiple SRS resource sets corresponding to the PUSCH.

In an embodiment, the terminal device determines a time domain resource corresponding to the PUSCH transmission based on a number of the first SRS resource sets and/or the second SRS resource sets.

In the method for PUSCH transmission provided by the embodiments of the present application, the terminal device determines one or more SRS resource sets corresponding to the PUSCH based on the first SRS resource set configured by the first parameter and/or the second SRS resource set configured by the second parameter. As such, when the PUSCH scheduled by DCI format 0_1 is only configured as S-TRP transmission, the M-TRP transmission for the PUSCH may still be performed.

In an embodiment, the terminal device further receives SRS resource indication information transmitted from the network device, where the SRS resource indication information is used for indicating SRS resources from the target SRS resource set. The terminal device may determine the SRS resources corresponding to the PUSCH based on the SRS resource indication information, and further determines the precoding and/or the number of transmission layers corresponding to the PUSCH.

In an embodiment, the PUSCH satisfies a first condition, where the first condition includes that:
the PUSCH is configured with target information, where the target information is used for indicating at least one of the following items:
a transmission or reception mode of the PUSCH;
the PUSCH being associated with multiple transmission and reception points (M-TRPs);
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator (TCI) states; or
a second group of TCI states associated with the PUSCH.

In an embodiment, the power control parameter includes at least one of the following items:
a parameter used for indicating a path loss reference signal;
a power control parameter *p0;* or
a path loss compensation factor *alpha.*

The terminal device may determine one or more SRS resource sets corresponding to the PUSCH based on whether the network device configures target information for the PUSCH or not.

The terminal device uses a first mode for determining the target SRS resource set in case that the network device configures the target information for PUSCH and uses another mode for determining the target SRS resource set in case that the network device does not configure the target information for PUSCH.

The target information is used for indicating at least one of the following items:
the transmission or reception mode of the PUSCH, for example, the network device configures the PUSCH for S-TRP or M-TRP transmission;
the PUSCH being associated with M-TRPs;
the PUSCH being associated with multiple precoding and/or number of layers, for example, the network device configures two pieces of information for indicating the precoding and/or the number of transmission layers for the PUSCH (for example, *precodingAndNumberOfLayers* and *precodingAndNumberOfLayers2* are configured simultaneously; and for another example, precoding and precoding2 are configured simultaneously);
second precoding and/or number of layers associated with the PUSCH, for example, the network device configures *precodingAndNumberOfLayers2* for the PUSCH;
the PUSCH being associated with multiple groups of SRS resources, for example, the network device configures two pieces of information for indicating SRS resources for the PUSCH (for example, *srsResourceIndicator* and *srsResourceIndicator2* are configured simultaneously);
a second group of SRS resources associated with the PUSCH, for example, the network device configures *ResourceIndicator2* for the PUSCH;
the PUSCH being associated with multiple groups of power control parameters, for example, the network device configures two groups of information for indicating power control parameters for the PUSCH (for example, *pathlossReferenceIndex* and *pathlossReferenceIndex2* are configured simultaneously; and for another example, *p0-PUSCH-alpha* and *p0-PUSCH-alpha2* are configured simultaneously);
a second group of power control parameters associated with the PUSCH, for example, the network device configures *pathlossReferenceIndex2* and/or *p0-PUSCH-alpha2* for the PUSCH;
the PUSCH being associated with multiple *SpatialRelationInfo* parameters for indicating the spatial filtering of the PUSCH, for example, the network device configures *SpatialRelationInfo* and/or *SpatialRelationInfo2* for the PUSCH;
a second group of *SpatialRelationInfo* parameters associated with the PUSCH, for example, the network device configures *SpatialRelationInfo2* for the PUSCH;
the PUSCH being associated with multiple TCI states, where the TCI states are used for indicating a quasi colocation (QCL) relationship for the PUSCH; or
a second group of TCI states associated with the PUSCH.

The power control parameter includes at least one of the following items: a parameter for indicating a path loss reference signal; a power control parameter *p0;* or a path loss compensation factor *alpha.*

In an embodiment, determining the target SRS resource set based on the first SRS resource set configured by the first parameter and/or the second SRS resource set configured by the second parameter includes at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
where N is an integer equal to or greater than 2.

In case that the terminal device determines that the network device configures the target information for the PUSCH, the terminal device determines the target SRS resource set based on the number of the first SRS resource sets and/or the number of the second SRS resource set.

Explanation is made below by taking the PUSCH as CG Type 1 PUSCH, the first parameter as *srs-ResourceSetToAddModList,* and the second parameter as *srs-ResourceSetToAddModListDCI-0-2* as an example.

If CG Type 1 PUSCH is configured as S-TRP transmission (or only one precoding and/or number of layers is configured, or second precoding and/or number of layers is not configured, or only one SRS resource is configured, or a second group of SRS resources is not configured, or only one group of power control parameters is configured, or a second group of power control parameters is not configured, or only one *SpatialRelationInfo* parameter is configured, or a second group of *SpatialRelationInfo* parameters is not configured, or only one TCI state is configured, or a second group of TCI states is not configured), determining the target SRS resource set based on the first SRS resource set configured by the first parameter and/or the second SRS resource set configured by the second parameter includes at least one of the following items.
(1) In case that the number of the first SRS resource sets is N, where N is greater than or equal to 2, it means that the *srs-ResourceSetToAddModList* includes multiple SRS resource sets, and the terminal device determines the target SRS resource set based on the first SRS resource set. For example, the target SRS resource set is an SRS resource set with the smallest identity (ID) in the first SRS resource set. For another example, the target SRS resource set is an SRS resource set with the largest ID in the first SRS resource set.
(2) In case that the number of the first SRS resource sets is 1, and the number of the second SRS resource sets is N, where N is greater than or equal to 2, it means that the first SRS resource set may be used for S-TRP transmission of the CG Type 1 PUSCH, and the second SRS resource set may be also used for S-TRP transmission of the CG Type 1 PUSCH.
(3) In case that the number of the first SRS resource sets is 1, and the number of the second SRS resource sets is 1, the first SRS resource set may be used for S-TRP transmission of the CG Type 1 PUSCH.

If CG Type 1 PUSCH is configured as M-TRP transmission (or two precoding and/or number of layers are configured, or second precoding and/or number of layers is configured, or two SRS resources are configured, or a second group of SRS resources is configured, or two groups of power control parameters are configured, or a second group of power control parameters is configured, or two *SpatialRelationInfo* parameters are configured, or a second group of *SpatialRelationInfo* parameters is configured, or two TCI states are configured, or a second group of TCI states is configured), determining the target SRS resource set based on the first SRS resource set configured by the first parameter and/or the second SRS resource set configured by the second parameter includes at least one of the following items.
(1) In case that the number of the first SRS resource sets is N, where N is greater than or equal to 2, it means that the *srs-ResourceSetToAddModList* includes multiple SRS resource sets, and the terminal device determines the target SRS resource set based on the first SRS resource set. For example, the target SRS resource set is multiple SRS resource sets in the first SRS resource set.
(2) In case that the number of the first SRS resource sets is 1, and the number of the second SRS resource sets is N, where N is greater than or equal to 2, it means that the first SRS resource set cannot be used for M-TRP transmission of the CG Type 1 PUSCH. If the CG Type 1 PUSCH is configured as M-TRP transmission, multiple SRS resource sets in the second SRS resource set configured by the second parameter may be used as the target SRS resource set.
(3) In case that the number of the first SRS resource sets is 1, and the number of the second SRS resource sets is 1, it means that the current configuration does not support M-TRP transmission of the CG Type 1 PUSCH, and the first SRS resource set may be used for S-TRP transmission of the CG Type 1 PUSCH. In this case, the terminal device may determine that this configuration is an error, or the terminal device does not expect the network device to configure the target information.

In the method for PUSCH transmission provided by the embodiments of the present application, in case that the network device configures target information for the PUSCH, the terminal device determines one or more SRS resource sets corresponding to the PUSCH based on the first SRS resource set configured by the first parameter and/or the second SRS resource set configured by the second parameter. As such, when the PUSCH scheduled by DCI format 0_1 is only configured as S-TRP transmission, the M-TRP transmission for the PUSCH may still be performed.

In an embodiment, determining the target SRS resource set based on the first SRS resource set configured by the first parameter and/or the second SRS resource set configured by the second parameter includes at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
where M is an integer equal to or greater than 2.

In case that the terminal device determines that the network device configures the target information for the PUSCH, the terminal device determines the target SRS resource set based on the number of the first SRS resource sets and/or the number of the second SRS resource set.

Explanation is made below by taking the PUSCH as CG Type 1 PUSCH, the first parameter as *srs-ResourceSetToAddModList,* and the second parameter as *srs-ResourceSetToAddModListDCI-0-2* as an example.

If the CG Type 1 PUSCH is configured as S-TRP transmission and is not configured with the target information (for example, only one precoding and/or number of layers is configured, or second precoding and/or number of layers is not configured, or only one SRS resource is configured, or a second group of SRS resources is not configured, or only one group of power control parameters is configured, or a second group of power control parameters is not configured, or only one *SpatialRelationInfo* parameter is configured, or a second group of *SpatialRelationInfo* parameters is not configured, or only one TCI state is configured, or a second group of TCI states is not configured), determining the target SRS resource set based on the first SRS resource set configured by the first parameter and/or the second SRS resource set configured by the second parameter includes at least one of the following items.
(1) In case that the number of the first SRS resource sets is M, where M is greater than or equal to 2, it means that the *srs-ResourceSetToAddModList* includes multiple SRS resource sets, and the terminal device determines the target SRS resource set to be one SRS resource set in the first SRS resource set.
   In case that the first SRS resource set includes multiple SRS resource sets, each SRS resource set of which has an SRS resource set ID, and all SRS resources in one SRS resource set are associated with the same TRP. Therefore, the target SRS resource set may be determined through the SRS resource set ID that satisfies a preset condition in the first SRS resource set. For example, the target SRS resource set is an SRS resource set with the smallest ID in the first SRS resource set. For another example, the target SRS resource set is an SRS resource set with the largest ID in the first SRS resource set.
(2) In case that the number of the first SRS resource sets is 1, and the number of the second SRS resource sets is M, where M is greater than or equal to 2, it means that one SRS resource set in the first SRS resource set may be used for S-TRP transmission of the CG Type 1 PUSCH, and one SRS resource set in the second SRS resource set may be also used for S-TRP transmission of the CG Type 1 PUSCH.
(3) In case that the number of the first SRS resource sets is 1, and the number of the second SRS resource sets is 1, one SRS resource set in the first SRS resource set may be used for S-TRP transmission of the CG Type 1 PUSCH, and the target SRS resource set is one SRS resource set in the first SRS resource set.

If the CG Type 1 PUSCH is configured as M-TRP transmission or is configured with target information (for example, the CG Type 1 PUSCH is configured as M-TRP transmission, or two precoding and/or number of layers are configured, or second precoding and/or number of layers is configured, or two SRS resources are configured, or a second group of SRS resources is configured, or two groups of power control parameters are configured, or a second group of power control parameters is configured, or two *SpatialRelationInfo* parameters are configured, or a second group of *SpatialRelationInfo* parameters is configured, or two TCI states are configured, or a second group of TCI states is configured), determining the target SRS resource set based on the first SRS resource set configured by the first parameter and/or the second SRS resource set configured by the second parameter includes at least one of the following items.
(1) In case that the number of the first SRS resource sets is M, where M is greater than or equal to 2, it means that the *srs-ResourceSetToAddModList* includes multiple SRS resource sets, and the terminal device determines the target SRS resource set to be M SRS resource sets in the first SRS resource set.
(2) In case that the number of the first SRS resource sets is 1, and the number of the second SRS resource sets is M, where M is greater than or equal to 2, it means that the first SRS resource set cannot be used for M-TRP transmission of the CG Type 1 PUSCH. The terminal device may determine that the target SRS resource set is the M SRS resource sets in the second SRS resource set.
(3) In case that the number of the first SRS resource sets is 1, and the number of the second SRS resource sets is 1, it means that the current configuration does not support M-TRP transmission of the CG Type 1 PUSCH, and the first SRS resource set may be used for S-TRP transmission of the CG Type 1 PUSCH. In this case, the terminal device may determine that this configuration is an error, and the terminal device does not expect the network device to configure the target information.

In an embodiment, when the number of the first SRS resource sets and the number of the second SRS resource sets are both 1, the network device should not configure the target information for THE PUSCH, for example, *pathlossReferenceIndex2* or *ResourceIndicator2* or *p0-PUSCH-alpha2* or *precodingAndNumberOfLayers2* should not be configured.

In the method for PUSCH transmission provided by the embodiments of the present application, in case that the network device configures target information for the PUSCH, the terminal device determines one or more SRS resource sets corresponding to the PUSCH based on the first SRS resource set configured by the first parameter and/or the second SRS resource set configured by the second parameter. As such, when the PUSCH scheduled by DCI format 0_1 is only configured as S-TRP transmission, the M-TRP transmission for the PUSCH may still be performed.

In an embodiment, in case that the PUSCH is not configured with the target information, determining the target SRS resource set based on the first SRS resource set configured by the first parameter and/or the second SRS resource set configured by the second parameter includes:
determining the target SRS resource set based on the first SRS resource set.

In case that the terminal device determines that the network device does not configure the target information for the PUSCH, the terminal device determines the target SRS resource set based on the first SRS resource set, where the target SRS resource set may be one or more SRS resource sets in the first SRS resource set.

In an embodiment, if the PUSCH is configured as S-TRP transmission or is not configured with the target information, even if both the first parameter and the second parameter are used to configure an SRS resource set, one SRS resource set in the first SRS resource set may be used for S-TRP transmission of the PUSCH. If the PUSCH is configured as M-TRP transmission, the terminal device may use multiple SRS resource sets in the first SRS resource set to perform M-TRP transmission of the PUSCH.

In an embodiment, the method further includes:
determining a number of a third parameter corresponding to the PUSCH, where the third parameter is used for indicating at least one of the following items:
a transmission or reception mode of the PUSCH;
a transmission and reception point (TRP) associated with the PUSCH;
precoding and/or number of layers associated with the PUSCH;
SRS resources associated with the PUSCH;
a power control parameter associated with the PUSCH;
*SpatialRelationInfo* associated with the PUSCH; or
a TCI state associated with the PUSCH.

In an embodiment, the power control parameter includes at least one of the following items:
a parameter used for indicating a path loss reference signal;
a power control parameter *p0*; or
a path loss compensation factor *alpha.*

The terminal device may determine the number of the third parameters corresponding to the PUSCH before determining the target SRS resource set based on the first SRS resource set configured by the first parameter and/or the second SRS resource set configured by the second parameter.

The third parameter is used for indicating at least one of the following items:
the transmission or reception mode of the PUSCH, for example, the network device configures the PUSCH for S-TRP or M-TRP transmission;
the TRP associated with the PUSCH, where the PUSCH is associated with one TRP when the PUSCH is configured as S-TRP transmission and is associated with multiple TRPs when the PUSCH is configured as M-TRP transmission;
precoding and/or number of layers associated with the PUSCH, for example, the network device configures two pieces of information for indicating the precoding and/or number of transmission layers for the PUSCH (for example, *precodingAndNumberOfLayers* and *precodingAndNumberOfLayers2* are configured simultaneously; and for another example, precoding and precoding2 are configured simultaneously);
SRS resources associated with the PUSCH, for example, the network device configures two pieces of information for indicating SRS resources for the PUSCH (for example, *ResourceIndicator* and *ResourceIndicator2* are configured simultaneously);
power control parameters associated with the PUSCH, for example, the network device configures two groups of information for indicating power control parameters for the PUSCH (for example, *pathlossReferenceIndex* and *pathlossReferenceIndex2* are configured simultaneously; and for another example, *p0-PUSCH-alpha* and *p0-PUSCH-alpha2* are configured simultaneously);
*SpatialRelationInfo* associated with the PUSCH, where the *SpatialRelationInfo* parameter is used for indicating the spatial filtering of the PUSCH, for example, the network device configures *SpatialRelationInfo* and/or *SpatialRelationInfo2* for the PUSCH; or
TCI states associated with the PUSCH, where the TCI states are used for indicating the QCL relationship for the PUSCH.

The power control parameter includes at least one of the following items: a parameter for indicating a path loss reference signal; a power control parameter *p0*; or a path loss compensation factor *alpha.*

In an embodiment, determining the target SRS resource set based on the first SRS resource set configured by the first parameter and/or the second SRS resource set configured by the second parameter includes:
determining the target SRS resource set based on the first SRS resource set and/or the second SRS resource set, and the number of the third parameters.

The terminal device may determine the SRS resource set corresponding to the PUSCH based on the number of the third parameters.

The terminal device may determine the target SRS resource set based on the number of the third parameters and the number of the first SRS resource sets.

The terminal device may also determine the target SRS resource set based on the number of the third parameters, the number of the first SRS resource sets and the number of the second SRS resource sets.

The terminal device may use a mode for determining the target SRS resource set in case that the number of the third parameters configured by the network device is 1; and may use another mode for determining the target SRS resource set in case that the number of the third parameters configured by the network device is multiple, for example, 2.

In the method for PUSCH transmission provided by the embodiments of the present application, the terminal device determines the target SRS resource set based on the first SRS resource set configured by the first parameter and/or the second SRS resource set configured by the second parameter, and the number of the third parameters. As such, when the PUSCH scheduled by DCI format 0_1 is only configured as S-TRP transmission, the M-TRP transmission for the PUSCH may still be performed.

In an embodiment, the number of the third parameters is X, and determining the target SRS resource set based on the first SRS resource set and/or the second SRS resource set, and the number of the third parameters includes at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the first SRS resource sets is less than X and the number of the second SRS resource sets is less than X, determining the target SRS resource set based on the first SRS resource set,
where X is an integer equal to or greater than 2.

In case that the number of the third parameters is X, where X is greater than or equal to 2, it means that the PUSCH is configured as M-TRP transmission and the terminal device determines the target SRS resource set based on the number of the third parameters in combination with the number of the first SRS resource sets and/or the number of the second SRS resource sets.

Explanation is made below by taking the PUSCH as CG Type 1 PUSCH, the first parameter as *srs-ResourceSetToAddModList,* and the second parameter as *srs-ResourceSetToAddModListDCI-0-2* as an example.

In case that the number of the third parameters is X, where X is greater than or equal to 2, it means that the CG Type 1 PUSCH is configured as M-TRP transmission, determining the target SRS resource set based on the first SRS resource set and/or the second SRS resource set, and the number of the third parameters includes at least one of the following items.
(1) In case that the number of the first SRS resource sets is greater than X, it means that the SRS resources in the first SRS resource set support M-TRP transmission of the CG Type 1 PUSCH, and the terminal device determines the target SRS resource set based on the first SRS resource set. In this case, even if the network device configures the number of other SRS resource sets to be greater than or equal to X, the terminal device may still use the SRS resources in the first SRS resource set for performing M-TRP transmission.
(2) In case that the number of the first SRS resource sets is equal to X, it means that the SRS resources in the first SRS resource set support M-TRP transmission of the CG Type 1 PUSCH, and the terminal device determines the target SRS resource set based on the first SRS resource set. In this case, even if the network device configures the number of other SRS resource sets to be greater than or equal to X, the terminal device may still use the SRS resources in the first SRS resource set for performing M-TRP transmission.
(3) In case that the number of the first SRS resource sets is less than X, it means that the SRS resources in the first SRS resource set are not enough to complete the M-TRP transmission of the CG Type 1 PUSCH. In this case, the M-TRP transmission of the CG Type 1 PUSCH may be performed by using SRS resources in the first SRS resource set and other SRS resources other than the first SRS resource set. In an embodiment, other SRS resources other than the first SRS resource set may be SRS resources in the second SRS resource set.
(4) In case that the number of the second SRS resource sets is greater than X, and the number of the first SRS resource sets is less than X, it means that although the SRS resources in the first SRS resource set are not enough to complete the M-TRP transmission of the CG Type 1 PUSCH, the SRS resources in the second SRS resource set support the completion of M-TRP transmission of the CG Type 1 PUSCH and thus the terminal device may determine the target SRS resource set based on the second SRS resource set.
(5) In case that the number of the second SRS resource sets is equal to X, and the number of the first SRS resource sets is less than X, it means that although the SRS resources in the first SRS resource set are not enough to complete the M-TRP transmission of the CG Type 1 PUSCH, the SRS resources in the second SRS resource set support the completion of the M-TRP transmission of the CG Type 1 PUSCH and thus the terminal device may determine the target SRS resource set based on the second SRS resource set.
(6) In case that the number of the first SRS resource sets is less than X, and the number of the second SRS resource sets is less than X, it means that both SRS resources in the first SRS resource set and SRS resources in the second SRS resource set are not enough to complete the M-TRP transmission of the CG Type 1 PUSCH, and the terminal device may determine the target SRS resource set based on the first SRS resource set, or the terminal device may determine that this configuration is an error, and the terminal device does not expect the network device to configure X third parameters. For example, other than using all SRS resource sets in the first SRS resource set for performing M-TRP transmission, the terminal device also uses other SRS resources, such as SRS resources in the second SRS resource set for performing M-TRP transmission.

In an embodiment, the number of the third parameters configured by the network device for PUSCH should be less than or equal to a maximum value of the number of the first SRS resource sets and the number of the second SRS resource sets.

For example, when both the number of the first SRS resource sets and the number of the second SRS resource sets configured by the network device are 1, the number of the third parameters configured by the network device for PUSCH should not be greater than 1.

For example, when the number of the first SRS resource sets configured by the network device is 3 and the number of the second SRS resource sets is 2, the number of the third parameters configured by the network device for the PUSCH should not be greater than 3.

In the method for PUSCH transmission provided by the embodiments of the present application, the terminal device determines the target SRS resource set by comparing the first SRS resource set configured by the first parameter and/or the second SRS resource set configured by the second parameter with the number of the third parameters. As such, when the PUSCH scheduled by DCI format 0_1 is only configured for S-TRP transmission, the M-TRP transmission for the PUSCH may still be performed.

In an embodiment, the number of the third parameters is Y, and determining the target SRS resource set based on the first SRS resource set and/or the second SRS resource set, and the number of the third parameters includes at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set including part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure a number of the third parameters to be Y,
where Y is an integer equal to or greater than 2.

In case that the number of the third parameters is Y, where Y is an integer greater than or equal to 2, it means that the PUSCH is configured as M-TRP transmission and the terminal device determines the target SRS resource set based on the number of the third parameters in combination with the number of the first SRS resource sets and/or the number of the second SRS resource sets.

Explanation is made below by taking the PUSCH as CG Type 1 PUSCH, the first parameter as *srs-ResourceSetToAddModList,* and the second parameter as *srs-ResourceSetToAddModListDCI-0-2* as an example.

In case that the number of the third parameters is Y where Y is an integer greater than or equal to 2, it means that the CG Type 1 PUSCH is configured as M-TRP transmission, and determining the target SRS resource set based on the first SRS resource set and/or the second SRS resource set, and the number of the third parameters includes at least one of the following items.
(1) In case that the number of the first SRS resource sets is greater than X, it means that the SRS resources in the first SRS resource set support M-TRP transmission of the CG Type 1 PUSCH, and the terminal device determines the target SRS resource set to be Y SRS resource sets in the first SRS resource set.
(2) In case that the number of the first SRS resource sets is equal to X, it means that the SRS resources in the first SRS resource set support M-TRP transmission of the CG Type 1 PUSCH, and the terminal device determines the target SRS resource set to be all SRS resource sets, that is, Y SRS resource sets in the first SRS resource set. In this case, even if the network device configures the number of other SRS resource sets to be greater than or equal to Y, the terminal device may still use the SRS resources in the first SRS resource set for performing M-TRP transmission.
(3) In case that the number of the first SRS resource sets is less than Y, it means that the SRS resources in the first SRS resource set are not enough to complete the M-TRP transmission of the CG Type 1 PUSCH. In this case, the M-TRP transmission of the CG Type 1 PUSCH may be performed using the SRS resources in the first SRS resource set and other SRS resources other than the first SRS resource set, and the terminal device determines that the target SRS resource set to be a set including part or all of the SRS resources in the first SRS resource set and other SRS resources other than the first SRS resource set. In an embodiment, other SRS resources other than the first SRS resource set may be SRS resources in the second SRS resource set.
(4) In case that the number of the second SRS resource sets is greater than Y, and the number of the first SRS resource sets is less than Y, it means that although the SRS resources in the first SRS resource set are not enough to complete the M-TRP transmission of the CG Type 1 PUSCH, the SRS resources in the second SRS resource set support the completion of M-TRP transmission of the CG Type 1 PUSCH. As such, the terminal device may determine the target SRS resource set to be Y SRS resource sets in the second SRS resource set.
(5) In case that the number of the second SRS resource sets is equal to Y, and the number of the first SRS resource sets is less than Y, it means that although the SRS resources in the first SRS resource set are not enough to complete the M-TRP transmission of the CG Type 1 PUSCH, the SRS resources in the second SRS resource set support the completion of M-TRP transmission of the CG Type 1 PUSCH. As such, the terminal device may determine the target SRS resource set to be Y SRS resource sets in the second SRS resource set.
(6) In case that the number of the first SRS resource sets is less than Y, and the number of the second SRS resource sets is less than Y, it means that both SRS resources in the first SRS resource set and SRS resources in the second SRS resource set are not enough to complete the M-TRP transmission of the CG Type 1 PUSCH, the terminal device may determine the target SRS resource set to be the first SRS resource set, or the terminal device may determine the target SRS resource set to be a set including all or part SRS resources in the first SRS resource set and other SRS resources other than the first SRS resource set, or the terminal device may determine that this configuration is an error, and the terminal device does not expect the network device to configure Y third parameters. For example, other than using all SRS resource sets in the first SRS resource set for performing M-TRP transmission, the terminal device also uses other SRS resources, such as SRS resources in the second SRS resource set for performing M-TRP transmission.

In an embodiment, the number of the third parameters configured by the network device for PUSCH should be less than or equal to a maximum value of the number of the first SRS resource sets and the number of the second SRS resource sets.

In the method for PUSCH transmission provided by the embodiments of the present application, the terminal device determines the target SRS resource set by comparing the first SRS resource set configured by the first parameter and/or the second SRS resource set configured by the second parameter with the number of the third parameters for presenting the transmission or reception mode of the PUSCH. As such, when the PUSCH scheduled by DCI format 0_1 is only configured as S-TRP transmission, the M-TRP transmission for the PUSCH may still be performed.

In an embodiment, the number of the third parameter is 1, and determining the target SRS resource set based on the first SRS resource set and/or the second SRS resource set, and the number of the third parameters includes:
determining the target SRS resource set to be one SRS resource set satisfying a preset condition in the first SRS resource set.

In case that the number of the third parameter is 1, for example, *p0-PUSCH-alpha* is indicated and *p0-PUSCH-alpha2* is not indicated, it means that PUSCH is configured as S-TRP transmission, the terminal device determines the target SRS resource set to be one SRS resource set that satisfies the preset condition in the first SRS resource set. The preset condition may be the SRS resource set with the smallest ID, or the SRS resource set with the largest ID, etc.

For example, when the number of the third parameter is 1, the terminal device determines the SRS resource set with the smallest ID in the first SRS resource set as the target SRS resource set.

For example, when the number of the third parameter is 1, the terminal device determines the SRS resource set with the largest ID in the first SRS resource set as the target SRS resource set.

In an embodiment, the first SRS resource set is an SRS resource set corresponding to DCI format 0_1; and/or
the second SRS resource set is an SRS resource set corresponding to DCI format 0_2.

An SRS resource set configured by the network device for PUSCH scheduled by DCI format 0_1 is the first SRS resource set included in the first parameter *srs-ResourceSetToAddModList.* An SRS resource set configured by the network device for PUSCH scheduled by DCI format 0_2 is the second SRS resource set included in the second parameter *srs-ResourceSetToAddModListDCI-0-2.*

In an embodiment, the method further includes:
determining a maximum number of layers corresponding to the PUSCH based on a target parameter for number of layers, where the target parameter for number of layers is a first parameter for number of layers or a second parameter for number of layers, the first parameter for number of layers is used for indicating the maximum number of layers corresponding to DCI format 0_1 and the second parameter for number of layers is used for indicating the maximum number of layers corresponding to DCI format 0_2.

In an embodiment, the maximum number of layers that could be indicated for the PUSCH is the maximum number of layers corresponding to the DCI format corresponding to the SRS resource set corresponding to PUSCH. The first parameter for number of layers and the second parameter for number of layers are different parameters, and their values may be the same or different.

In an embodiment, when the target SRS resource set includes all or part of the SRS resource sets in the first SRS resource set, the maximum number of layers corresponding to the PUSCH is determined based on the first parameter for number of layers, where the first parameter for number of layers is used for indicating the maximum number of layers corresponding to DCI format 0_1, the maximum number of layers corresponding to the PUSCH should not be greater than the maximum number of layers corresponding to DCI format 0_1. The first parameter for number of layers, for example, is *maxRank.*

In an embodiment, when the target SRS resource set includes all or part of the SRS resource sets in the second SRS resource set, the maximum number of layers corresponding to the PUSCH is determined based on the second parameter for number of layers, where the second parameter for number of layers is used for indicating the maximum number of layers corresponding to DCI format 0_2, the maximum number of layers corresponding to the PUSCH should not be greater than the maximum number of layers corresponding to DCI format 0_2. The second parameter for number of layers, for example, is *maxRankDCI-0-2-r16.*

In an embodiment, in case that the PUSCH is configured as S-TRP transmission or is not configured with the target information (for example, only one precoding and/or number of layers is configured, or second precoding and/or number of layers is not configured, or only one SRS resource is configured, or a second group of SRS resources is not configured, or only one group of power control parameters is configured, or a second group of power control parameters is not configured, or only one *SpatialRelationInfo* parameter is configured, or a second group of *SpatialRelationInfo* parameters is not configured, or only one TCI state is configured, or a second group of TCI states is not configured), a mode for determining the maximum number of layers corresponding to the PUSCH includes: determining the maximum number of layers corresponding to the PUSCH based on the first parameter for number of layers.

In an embodiment, in case that the PUSCH is configured as M-TRP transmission or is configured with target information (for example, the PUSCH is configured as M-TRP transmission, or two precoding and/or number of layers are configured, or second precoding and/or number of layers is configured, or two SRS resources are configured, or a second group of SRS resources is configured, or two groups of power control parameters are configured, or a second group of power control parameters is configured, or two *SpatialRelationInfo* parameters are configured, or a second group of *SpatialRelationInfo* parameters is configured, or two TCI states are configured, or a second group of TCI states is configured), a mode for determining the maximum number of layers corresponding to the PUSCH includes at least one of the following items.
(1) In case that the number of the first SRS resource sets is M, where M is greater than or equal to 2, the maximum number of layers corresponding to the PUSCH is determined based on the first parameter for number of layers (such as *maxRank*)*.*
(2) In case that the number of the first SRS resource sets is 1, and the number of the second SRS resource sets is M, where M is greater than or equal to 2, the maximum number of layers corresponding to the PUSCH is determined based on the second parameter for number of layers (such as *maxRankDCI-0-2-r16*).

In an embodiment, in case that the number of the third parameters is 1 (for example, *p0-PUSCH-alpha* is configured and *p0-PUSCH-alpha2* is not configured; or *precodingAndNumberOfLayers* is configured and *precodingAndNumberOfLayers2* is not configured; or *pathlossReferenceIndex* is configured and *pathlossReferenceIndex2* is not configured; or, *ResourceIndicator* is configured and *ResourceIndicator2* is not configured; or *SpatialRelationInfo* is configured and *SpatialRelationInfo2* is not configured), the mode for determining the maximum number of layers corresponding to the PUSCH includes: determining the maximum number of layers corresponding to the PUSCH based on the first parameter for number of layers. In an embodiment, the number of the third parameters is M, and M is greater than or equal to 2 (for example, both *p0-PUSCH-alpha* and *p0-PUSCH-alpha2* are configured; or, both *precodingAndNumberOfLayers* and *precodingAndNumberOfLayers2* are configured; or, both *pathlossReferenceIndex* and *pathlossReferenceIndex2* are configured; or both *ResourceIndicator* and *ResourceIndicator2* are configured; or both *SpatialRelationInfo* and *SpatialRelationInfo2* are configured), the mode for determining the maximum number of layers corresponding to the PUSCH includes at least one of the following items.
(1) In case that the number of the first SRS resource sets is greater than or equal to M, where M is greater than or equal to 2, the maximum number of layers corresponding to the PUSCH is determined based on the first parameter for number of layers (such as *maxRank*)*.*
(2) In case that the number of the first SRS resource sets is 1, and the number of the second SRS resource sets is greater than or equal to M, where M is greater than or equal to 2, the maximum number of layers corresponding to the PUSCH is determined based on the second parameter for number of layers (such as *maxRankDCI-0-2-r16*).

In an embodiment, if the network device configures *maxRankDCI-0-2-r16,* when the SRS resource set corresponding to CG PUSCH transmission is the SRS resource set configured in *ResourceSetToAddModList,* that is, the first SRS resource set, the number of layers that may be indicated for CG PUSCH transmission is determined based on *maxRank* in PUSCH-Config and the number of layers for CG PUSCH transmission should not be greater than *maxRank*; when the SRS resource set corresponding to CG PUSCH transmission is the SRS resource set configured in *srs-ResourceSetToAddModListDCI-0-2,* the number of layers that may be indicated for CG PUSCH transmission is determined based on *maxRankDCI-0-2-r16* in PUSCH-Config and the number of layers for CG PUSCH transmission should not be greater than *maxRankDCI-0-2-r16.*

In an embodiment, the method further includes:
determining a bit width and/or an encoding mode of a first indication parameter based on the maximum number of layers indicated by the target parameter for number of layers, and/or determining a bit width and/or an encoding mode of a second indication parameter based on the maximum number of layers indicated by the target parameter for number of layers, where the first indication parameter is used for indicating an SRS resource corresponding to the PUSCH, and the second indication parameter is used for indicating precoding and/or number of layers corresponding to the PUSCH.

In an embodiment, the terminal device determines the bit width and/or the encoding mode of the first indication parameter based on the maximum number of layers corresponding to the SRS resource set corresponding to the PUSCH, and/or determines the bit width and/or the encoding mode of the second indication parameter based on the maximum number of layers corresponding to the SRS resource set corresponding to the PUSCH.

The first indication parameter is an SRS resource indication parameter, used for indicating the SRS resource corresponding to the PUSCH; and the second indication parameter is precoding and/or number of layers indication parameter, used for indicating the precoding and/or number of layers corresponding to the PUSCH. The first indication parameter is, for example, the parameter *srs-ResourceIndicator* in *rrc-ConfiguredUplinkGrant,* and the second indication parameter is, for example, the parameter *precodingAndNumberOfLayers* in *rrc-ConfiguredUplinkGrant.*

In an embodiment, the method further includes:
determining a bit width and/or an encoding mode of a first indication parameter based on a number of SRS resources in the target SRS resource set, where the first indication parameter is used for indicating an SRS resource corresponding to the PUSCH.

The terminal device may determine the bit width and/or encoding mode of the first indication parameter based on the number of SRS resources included in the SRS resource set corresponding to the PUSCH.

The first indication parameter is an SRS resource indication parameter, which is used for indicating the SRS resource corresponding to the PUSCH, such as the parameter *srs-ResourceIndicator* in *rrc-ConfiguredUplinkGrant.*

In an embodiment, the bit width and/or the encoding mode of the first indication parameter is determined based on the number of SRS resources included in one SRS resource set of the target SRS resource set, where the first indication parameter is used for indicating an SRS resource corresponding to the PUSCH.

In an embodiment, the target SRS resource set is a set including SRS resources corresponding to a transmission procedure of the PUSCH.

After determining the target SRS resource set corresponding to the PUSCH, the terminal device may use the target SRS resource set for PUSCH transmission, or may also use other SRS resources other than the target SRS resource set for PUSCH transmission during the actual PUSCH transmission procedure.

In an embodiment, the first SRS resource set and/or the second SRS resource set are SRS resource sets corresponding to the PUSCH transmission mode.

The first SRS resource set and/or the second SRS resource set are SRS resource sets corresponding to the PUSCH transmission mode. In an embodiment, the PUSCH transmission mode includes codebook or nonCodebook.

For example, when the PUSCH is configured as codebook based transmission, the CG Type 1 PUSCH transmission corresponds to the SRS resource set with a usage type configured to be "codebook" included in *srs-ResourceSetToAddModList* or *srs-ResourceSetToAddModListDCI-0-2.*

For example, when the PUSCH is configured as nonCodebook based transmission, the CG Type 1 PUSCH transmission corresponds to the SRS resource set with a usage type configured to be "nonCodebook" included in *srs-ResourceSetToAddModList* or *srs-ResourceSetToAddModListDCI-0-2.*

In an embodiment, a maximum value of the number of the first SRS resource sets and the number of the second SRS resource sets is greater than or equal to the number of the third parameters configured by the network device for the PUSCH.

In an embodiment, the SRS resource set in the embodiments of the present application is an SRS resource set configured by the network device through *SRS-ResourceSet.*

In an embodiment, the SRS resource set in the embodiments of the present application is a set including SRS resources that may be indicated by the SRS resource indication parameter for the PUSCH.

In an embodiment, the method for PUSCH transmission provided by the embodiments of the present application may be applied to CG PUSCH, such as CG Type 1 PUSCH, CG Type 2 PUSCH, etc.

In an embodiment, the method for PUSCH transmission provided by the embodiments of the present application may be applied to dynamically scheduled PUSCH or semi-statically configured PUSCH, such as PUSCH scheduled or activated by DCI, PUSCH activated by the media access control (MAC) control element (CE), etc.

For example, PUSCH scheduled by DCI format 0_0, PUSCH scheduled by DCI format 0_1, PUSCH scheduled by DCI format 0_2, etc.

In an embodiment, the method for PUSCH transmission provided by the embodiments of the present application may be applied to a repetition PUSCH, such as a repetition PUSCH in multiple sub-slots in the 3GPP NR system, that is, PUSCH of which repetition scheme is repetition Type B; for example, a repetition PUSCH in multiple slots in the 3GPP NR system, that is, PUSCH of which repetition scheme is repetition Type A.

In an embodiment, the method for PUSCH transmission provided by the embodiments of the present application may be also applied to PUSCH without repetition, or to a repetition PUSCH in the frequency domain, or to a repetition PUSCH in the spatial domain.

In the method for PUSCH transmission provided by the embodiments of the present application, the terminal device determines one or more SRS resource sets corresponding to the PUSCH based on whether the network device configures the target information for the PUSCH or not, or based on the number of the third parameters configured by the network device, in combination with the number of the first SRS resource sets and/or the number of the second SRS resource sets. As such, when the PUSCH scheduled by DCI format 0_1 is only configured as S-TRP transmission, the M-TRP transmission for the PUSCH may still be performed.

FIG. 2 is a second schematic flowchart of a method for PUSCH transmission according to an embodiment of the present application. As shown in FIG. 2, the method for PUSCH transmission according to an embodiment of the present application may be performed by a network device (for example, a base station). The method includes at least the following steps.

Step 201: transmitting SRS resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and

Step 202: receiving the PUSCH transmitted from the terminal device based on the SRS resource indication information.

In an embodiment, the network device transmits SRS resource indication information to the terminal device, where the SRS resource indication information is used for indicating an SRS resource corresponding to PUSCH transmission from the target SRS resource set. The SRS resource indication information is, for example, *srs-Resourcelndicator.*

In an embodiment, the SRS resource indication information includes multiple pieces of information (for example, *srs-Resourcelndicator* and *srs-ResourceIndicator2).* In an embodiment, when the SRS resource indication information includes multiple pieces of information and a number of the target SRS resource set is multiple, multiple pieces of the SRS resource indication information have a one-to-one correspondence with the multiple target SRS resource sets. For example, the first SRS resource indication information corresponds to the first SRS resource set, and the second SRS resource indication information corresponds to the second SRS resource set.

There is a correspondence between the target SRS resource set and the first SRS resource set configured by the first parameter and/or the second SRS resource set configured by the second parameter.

In an embodiment, the correspondence between the target SRS resource set and the first SRS resource set configured by the first parameter and/or the second SRS resource set configured by the second parameter includes: the target SRS resource set includes an SRS resource set in the first SRS resource set configured by the first parameter and/or an SRS resource set in the second SRS resource set configured by the second parameter.

In an embodiment, the correspondence between the target SRS resource set and the first SRS resource set configured by the first parameter includes: the target SRS resource set includes a set including SRS resource sets in the first SRS resource set configured by the first parameter.

In an embodiment, the correspondence between the target SRS resource set and the first SRS resource set configured by the first parameter includes: the target SRS resource set includes a set including SRS resource sets in the second SRS resource set configured by the second parameter.

In an embodiment, the correspondence between the target SRS resource set and the first SRS resource set configured by the first parameter includes: partial SRS resources in the target SRS resource set are SRS resources in the first SRS resource set configured by the first parameter.

In an embodiment, the correspondence between the target SRS resource set and the second SRS resource set configured by the second parameter includes: partial SRS resources in the target SRS resource set are SRS resources in the second SRS resource set configured by the second parameter.

In an embodiment, the correspondence between the target SRS resource set and the first SRS resource set configured by the first parameter and/or the second SRS resource set configured by the second parameter includes: partial SRS resources in the target SRS resource set are SRS resources in the first SRS resource set configured by the first parameter and partial SRS resources in the target SRS resource set are SRS resources in the second SRS resource set configured by the second parameter.

In an embodiment, the target SRS resource set corresponds to the first SRS resource set configured by the first parameter and/or the second SRS resource set configured by the second parameter.

In an embodiment, the method further includes:
configuring target information for the PUSCH, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, the correspondence between the target SRS resource set and the first SRS resource set configured by the first parameter and/or the second SRS resource set configured by the second parameter includes at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
where M is an integer equal to or greater than 2.

In an embodiment, the correspondence between the target SRS resource set and the first SRS resource set configured by the first parameter and/or the second SRS resource set configured by the second parameter includes:
in case that the network device does not configure target information for the PUSCH, the target SRS resource set including all or part of SRS resource sets in the first SRS resource set;
the target information is used for indicating at least one of the following items:
   a transmission or reception mode of the PUSCH;
   the PUSCH being associated with M-TRPs;
   the PUSCH being associated with multiple precoding and/or number of layers;
   second precoding and/or number of layers associated with the PUSCH;
   the PUSCH being associated with multiple groups of SRS resources;
   a second group of SRS resources associated with the PUSCH;
   the PUSCH being associated with multiple groups of power control parameters;
   a second group of power control parameters associated with the PUSCH;
   the PUSCH being associated with multiple *SpatialRelationInfo* parameters;
   a second group of *SpatialRelationInfo* parameters associated with the PUSCH;
   the PUSCH being associated with multiple TCI states; or
   a second group of TCI states associated with the PUSCH.

In an embodiment, the correspondence between the target SRS resource set and the first SRS resource set configured by the first parameter and/or the second SRS resource set configured by the second parameter includes:
the correspondence exists between the target SRS resource set and the first SRS resource set and/or the second SRS resource set, and a third parameter, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

In an embodiment, the power control parameter includes at least one of the following items:
a parameter used for indicating a path loss reference signal;
a power control parameter *p0;* or
a path loss compensation factor *alpha.*

In an embodiment, the number of the third parameters is Y, the correspondence between the target SRS resource set and the first SRS resource set configured by the first parameter and/or the second SRS resource set configured by the second parameter includes at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set including part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
where Y is an integer equal to or greater than 2.

In an embodiment, the number of the third parameters is 1, the correspondence between the target SRS resource set and the first SRS resource set configured by the first parameter and/or the second SRS resource set configured by the second parameter includes:
the target SRS resource set being one SRS resource set satisfying a preset condition in the first SRS resource set.

In an embodiment, the first SRS resource set is an SRS resource set corresponding to DCI format 0_1; and/or
the second SRS resource set is an SRS resource set corresponding to DCI format 0_2.

In an embodiment, a maximum number of layers corresponding to the PUSCH is a maximum number of layers indicated by a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In case that the target SRS resource set includes all or part of the SRS resource set in the first SRS resource set, the network device determines that the target parameter for number of layers is the first parameter for number of layers, and the first parameter for number of layers is used for indicating the maximum number of layers corresponding to DCI format 0_1.

In case that the target SRS resource set includes all or part of the SRS resource set in the second SRS resource set, the network device determines that the target parameter for number of layers is the second parameter for number of layers.

The terminal device determines the maximum number of layers corresponding to the PUSCH based on the target parameter for number of layers.

The first layer parameter and the second layer parameter are different parameters, and their values may be the same or different.

In an embodiment, the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

In an embodiment, a bit width and/or an encoding mode of the SRS resource indication information is determined based on a number of SRS resources in the target SRS resource set.

In an embodiment, the terminal device transmits the PUSCH based on the SRS resource indication information.

Predetermined modes and preset conditions provided by the embodiments of the present application may be referred to the above method embodiments, and are not described again here.

The solutions of the embodiments of the present application are further introduced below through several specific examples.

### Example 1:

For CG Type 1 PUSCH, when the PUSCH transmission is configured to be codebook/non-codebook, for example, when the parameter *txConfig* in the PUSCH-Config IE is configured to be "Codebook"/"nonCodebook", the method for PUSCH transmission includes at least one of the following items.

Case 1: In this case, *rrc-ConfiguredUplinkGrant IE* in *ConfiguredGrantConfig* indicates *pathlossReferenceIndex2.*
(1) If *srs-ResourceSetToAddModList* includes two SRS resource sets with usage configured to be "Codebook"/"nonCodebook", CG Type 1 PUSCH corresponds to two SRS resource sets with usage configured to be "Codebook"/"nonCodebook" included in the higher layer parameter *srs-ResourceSetToAddModList.*
(2) If *srs-ResourceSetToAddModList* includes one SRS resource set with usage configured to be "Codebook"/"nonCodebook" and *srs-ResourceSetToAddModListDCI-0-2* includes two SRS resource sets with usage configured to be "Codebook"/"nonCodebook", CG Type 1 PUSCH transmission corresponds to two SRS resource sets with usage configured to be "Codebook"/"nonCodebook" included in the higher layer parameter *srs-ResourceSetToAddModListDCI-0-2.*
(3) In case that the *srs-ResourceSetToAddModList* includes one SRS resource set with usage configured to be "Codebook"/"nonCodebook", and *srs-ResourceSetToAddModListDCI-0-2* includes one SRS resource set with usage configured to be "Codebook"/"nonCodebook", this configuration may be determined to be an error case, and the UE does not expect to configure *pathlossReferenceIndex2*/*precodingAndNumberOfLayers2*/*srs-ResourceIndicator2* in the *rrc-ConfiguredUplinkGrant IE* in *ConfiguredGrantConfig.*

Case 2: In this case, *pathlossReferenceIndex2* is not indicated in *ConfiguredGrantConfig.*

CG Type 1 PUSCH transmission corresponds to multiple SRS resource sets with usage configured to be "Codebook"/"nonCodebook" included in the higher layer parameter *srs-ResourceSetToAddModList.*

Case 3: In this case, the *rrc-ConfiguredUplinkGrant IE* in *ConfiguredGrantConfig* includes 2 parameters used for indicating the path loss reference signal (for example, both *pathlossReferenceIndex* and *pathlossReferenceIndex2* are indicated).
(1) If *srs-ResourceSetToAddModList* includes two SRS resource sets with usage configured to be "Codebook"/"nonCodebook", CG Type 1 PUSCH corresponds to two SRS resource sets with usage configured to be "Codebook"/"nonCodebook" included in the higher layer parameter *srs-ResourceSetToAddModList.*
(2) If *srs-ResourceSetToAddModList* includes one SRS resource set with usage configured to be "Codebook"/"nonCodebook" and *srs-ResourceSetToAddModListDCI-0-2* includes two SRS resource sets with usage configured to be "Codebook"/"nonCodebook", CG Type 1 PUSCH transmission corresponds to two SRS resource sets with usage configured to be "Codebook"/"nonCodebook" included in the higher layer parameter *srs-ResourceSetToAddModListDCI-0-2.*
(3) In case that the *srs-ResourceSetToAddModList* includes one SRS resource set with usage configured to be "Codebook"/"nonCodebook", and *srs-ResourceSetToAddModListDCI-0-2* includes one SRS resource set with usage configured to be "Codebook"/"nonCodebook", this configuration may be determined to be an error case, or the UE does not expect that the *ConfiguredGrantConfig* includes two parameters indicating *p0* and/or *alpha.*
(4) If *srs-ResourceSetToAddModList* includes one SRS resource set with usage configured to be "Codebook"/"nonCodebook" and *srs-ResourceSetToAddModListDCI-0-2* includes one SRS resource set with usage configured to be "Codebook"/"nonCodebook", CG Type 1 PUSCH transmission corresponds to one SRS resource set with usage configured to be "Codebook"/"nonCodebook" included in the higher layer parameter *srs-ResourceSetToAddModList* and the CG Type 2 PUSCH may only perform S-TRP transmission.

Case 4: In this case, the *rrc-ConfiguredUplinkGrant IE* in *ConfiguredGrantConfig* includes one parameter used for indicating the path loss reference signal (for example, only *pathlossReferenceIndex* is indicated but *pathlossReferenceIndex2* is not indicated).

CG Type 1 PUSCH transmission corresponds to one SRS resource set with usage configured to be "Codebook"/"nonCodebook" (for example, an SRS resource set with the smallest ID) included in the higher layer parameter *srs-ResourceSetToAddModList.*

### Example 2:

For CG Type 2 PUSCH, when the PUSCH transmission is configured to be codebook/non-codebook, for example, when the parameter *txConfig* in the PUSCH-Config IE is configured to be "Codebook"/"nonCodebook", the method for PUSCH transmission includes at least one of the following items.

Case 1: In this case, *p0-PUSCH-alpha2* is indicated in *ConfiguredGrantConfig.*
(1) If *srs-ResourceSetToAddModList* includes two SRS resource sets with usage configured to be "Codebook"/"nonCodebook", then CG Type 2 PUSCH corresponds to two SRS resource sets with usage configured to be "Codebook"/"nonCodebook" included in the higher layer parameter *srs-ResourceSetToAddModList.*
(2) If *srs-ResourceSetToAddModList* includes one SRS resource set with usage configured to be "Codebook"/"nonCodebook" and *srs-ResourceSetToAddModListDCI-0-2* includes two SRS resource sets with usage configured to be "Codebook"/"nonCodebook", then CG Type 2 PUSCH transmission corresponds to two SRS resource sets with usage configured to be "Codebook"/"nonCodebook" included in the higher layer parameter *srs-ResourceSetToAddModListDCI-0-2.*
(3) In case that the *srs-ResourceSetToAddModList* includes one SRS resource set with usage configured to be "Codebook"/"nonCodebook", and *srs-ResourceSetToAddModListDCI-0-2* includes one SRS resource set with usage configured to be "Codebook"/"nonCodebook", this configuration may be determined to be an error case, or the UE does not expect that *ConfiguredGrantConfig* includes *p0-PUSCH-alpha2.*

Case 2: In this case, *p0-PUSCH-alpha2* is not indicated in *ConfiguredGrantConfig.*

CG Type 2 PUSCH transmission corresponds to multiple SRS resource sets with usage configured to be "Codebook"/"nonCodebook" included in the higher layer parameter *srs-ResourceSetToAddModList.*

Case 3: In this case, *ConfiguredGrantConfig* includes two parameters used for indicating *p0* and/or *alpha* (for example, *p0-PUSCH-alpha* and *p0-PUSCH-alpha2* are indicated simultaneously).
(1) If *srs-ResourceSetToAddModList* includes two SRS resource sets with usage configured to be "Codebook"/"nonCodebook", then CG Type 2 PUSCH corresponds to two SRS resource sets with usage configured to be "Codebook"/"nonCodebook" included in the higher layer parameter *srs-ResourceSetToAddModList.*
(2) If *srs-ResourceSetToAddModList* includes one SRS resource set with usage configured to be "Codebook"/"nonCodebook" and *srs-ResourceSetToAddModListDCI-0-2* includes two SRS resource sets with usage configured to be "Codebook"/"nonCodebook", then CG Type 2 PUSCH transmission corresponds to two SRS resource sets with usage configured to be "Codebook"/"nonCodebook" included in the higher layer parameter *srs-ResourceSetToAddModListDCI-0-2.*
(3) In case that the *srs-ResourceSetToAddModList* includes one SRS resource set with usage configured to be "Codebook"/"nonCodebook", and *srs-ResourceSetToAddModListDCI-0-2* includes one SRS resource set with usage configured to be "Codebook"/"nonCodebook", this configuration may be determined to be an error case, or the UE does not expect that the *ConfiguredGrantConfig* includes two parameters indicating *p0* and/or *alpha.*
(4) If *srs-ResourceSetToAddModList* includes one SRS resource set with usage configured to be "Codebook"/"nonCodebook" and *srs-ResourceSetToAddModListDCI-0-2* includes one SRS resource set with usage configured to be "Codebook"/"nonCodebook", then CG Type 2 PUSCH transmission corresponds to one SRS resource set with usage configured to be "Codebook"/"nonCodebook" included in the higher layer parameter *srs-ResourceSetToAddModList* and the CG Type 2 PUSCH may only perform S-TRP transmission.

Case 4: In this case, *ConfiguredGrantConfig* includes one parameter indicating *p0* and/or *alpha* (for example, *p0-PUSCH-alpha* is indicated, but *p0-PUSCH-alpha2* is not indicated), the CG Type 2 PUSCH transmission corresponds to one SRS resource set with usage configured to be "Codebook"/"nonCodebook" (for example, an SRS resource set with the smallest ID) included in the higher layer parameter *srs-ResourceSetToAddModList.*

### Example 3:

For CG Type 1 PUSCH, if both *maxRankDCI-0-2-r16* and *maxRank* are configured, the number of transmission layers for the CG Type 1 PUSCH should not be greater than *maxRank* when the SRS resource set corresponding to CG Type 1 PUSCH transmission is the SRS resource set configured in *ResourceSetToAddModList*; or the number of transmission layers for CG Type 1 PUSCH should not be greater than *maxRankDCI-0-2-r16* when the SRS resource set corresponding to CG Type 1PUSCH transmission is the SRS resource set configured in *srs-ResourceSetToAddModListDCI-0-2.*

In case that *maxRank* is configured but *maxRankDCI-0-2-r16* is not configured, the number of transmission layers for CG Type 1 PUSCH should not be greater than *maxRank.*

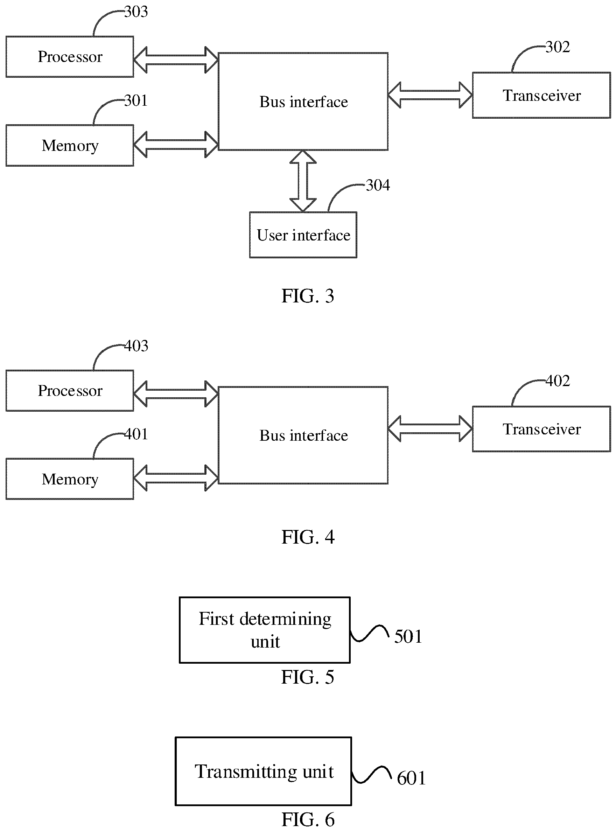

FIG. 3 is a schematic structural diagram of a terminal device according to an embodiment of the present application. As shown in FIG. 3, the terminal device includes a memory 301, a transceiver 302 and a processor 303,
where the memory 301 is used for storing a computer program; the transceiver 302 is used for transmitting and receiving data under control of the processor 303.

In FIG. 3, a bus architecture may include any number of interconnected buses and bridges, which are linked together through various circuits of one or more processors represented by processor 303 and one or more memories represented by the memory 301. The bus architecture may also link together various other circuits, such as peripherals, voltage regulators, and power management circuits, which are well known in the art, and therefore are not further described in the present application. The bus interface provides an interface. The transceiver 302 may include multiple elements, i.e., including a transmitter and a receiver, units for providing communication with various other devices over transmission media including wireless channels, wired channels, fiber optic cables, and the like. For different user equipment, the user interface 304 may also be an interface capable of externally or internally connecting the required equipment, and the connected equipment includes, but not limited to, a keypad, a display, a speaker, a microphone, a joystick, and the like.

The processor 303 is responsible for managing the bus architecture and general processing, and the memory 301 may store data used by the processor 303 when performing operations.

The processor 303 may be a central processing unit (CPU), an application specific integrated circuit (ASIC), a field-programmable gate array (FPGA), or a complex programmable logic device (CPLD), the processor may also use a multi-core architecture.

The processor 303 is used for reading the computer program in the memory 301 and perform the following operations:
determining a target SRS resource set based on a first SRS resource set configured by a first parameter and/or a second SRS resource set configured by a second parameter, where the target SRS resource set is one or more SRS resource sets corresponding to a PUSCH.

In an embodiment, the PUSCH satisfies a first condition, and the first condition includes that:
the PUSCH is configured with target information, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, determining the target SRS resource set based on the first SRS resource set configured by the first parameter and/or the second SRS resource set configured by the second parameter includes at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
where N is an integer equal to or greater than 2.

In an embodiment, determining the target SRS resource set based on the first SRS resource set configured by the first parameter and/or the second SRS resource set configured by the second parameter includes at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
where M is an integer equal to or greater than 2.

In an embodiment, in case that the PUSCH is not configured with the target information, determining the target SRS resource set based on the first SRS resource set configured by the first parameter and/or the second SRS resource set configured by the second parameter includes:
determining the target SRS resource set based on the first SRS resource set.

In an embodiment, the operations further include:
determining a number of a third parameter corresponding to the PUSCH, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

In an embodiment, determining the target SRS resource set based on the first SRS resource set configured by the first parameter and/or the second SRS resource set configured by the second parameter includes:
determining the target SRS resource set based on the first SRS resource set and/or the second SRS resource set, and the number of the third parameters.

In an embodiment, the number of the third parameters is X, and determining the target SRS resource set based on the first SRS resource set and/or the second SRS resource set, and the number of the third parameters includes at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the first SRS resource sets is less than X and the number of the second SRS resource sets is less than X, determining the target SRS resource set based on the first SRS resource set,
where X is an integer equal to or greater than 2.

In an embodiment, the number of the third parameters is Y, and determining the target SRS resource set based on the first SRS resource set and/or the second SRS resource set, and the number of the third parameters includes at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set including part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
where Y is an integer equal to or greater than 2.

In an embodiment, the number of the third parameters is 1, and determining the target SRS resource set based on the first SRS resource set and/or the second SRS resource set, and the number of the third parameters includes:
determining the target SRS resource set to be one SRS resource set satisfying a preset condition in the first SRS resource set.

In an embodiment, the power control parameter includes at least one of the following items:
a parameter used for indicating a path loss reference signal;
a power control parameter *p0;* or
a path loss compensation factor *alpha.*

In an embodiment, the first SRS resource set is an SRS resource set corresponding to DCI format 0_1; and/or
the second SRS resource set is an SRS resource set corresponding to DCI format 0_2.

In an embodiment, the operations further include:
determining a maximum number of layers corresponding to the PUSCH based on a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the operations further include:
determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, the first indication parameter is used for indicating an SRS resource corresponding to the PUSCH, and the second indication parameter is used for indicating precoding and/or number of layers corresponding to the PUSCH.

In an embodiment, the operations further include:
determining a bit width and/or an encoding mode of a first indication parameter based on a number of SRS resources in the target SRS resource set, where the first indication parameter is used for indicating an SRS resource corresponding to the PUSCH.

In an embodiment, the target SRS resource set is a set including SRS resources corresponding to a transmission procedure of the PUSCH.

In an embodiment, the first SRS resource set and/or the second SRS resource set are SRS resource sets corresponding to the PUSCH transmission mode.

It should be noted here that the above-mentioned terminal device according to the embodiments of the present application may implement all the method steps implemented by the above-mentioned method embodiments performed by the terminal device, and may achieve the same effect. The same parts and beneficial effects as the same method embodiments are not repeated in the present application.

FIG. 4 is a schematic structural diagram of a network device according to an embodiment of the present application. As shown in FIG. 4, the network device includes a memory 401, a transceiver 402 and a processor 403,
where the memory 401 is used for storing computer programs; the transceiver 402 is used for transmitting and receiving data under control of the processor 403.

In FIG. 4, a bus architecture may include any number of interconnected buses and bridges, which are linked together through various circuits of one or more processors represented by processor 403 and one or more memories represented by the memory 401. The bus architecture may also link together various other circuits, such as peripherals, voltage regulators, and power management circuits, which are well known in the art, and therefore are not further described in the present application. The bus interface provides an interface. The transceiver 402 may include multiple elements, i.e., including a transmitter and a receiver, units for providing communication with various other devices over transmission media including wireless channels, wired channels, fiber optic cables, and the like. The processor 403 is responsible for managing the bus architecture and general processing, and the memory 401 may store data used by the processor 403 when performing operations.

The processor 403 may be a central processing unit (CPU), an application specific integrated circuit (ASIC), a field-programmable gate array (FPGA), or a complex programmable logic device (CPLD), the processor may also use a multi-core architecture.

The processor 403 is used for reading the computer program in the memory 401 and perform the following operations:
transmitting SRS resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter.

In an embodiment, the operations further include:
configuring target information for the PUSCH, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, the correspondence between the target SRS resource set and the first SRS resource set configured by the first parameter and/or the second SRS resource set configured by the second parameter includes at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
where M is an integer equal to or greater than 2.

In an embodiment, the correspondence between the target SRS resource set and the first SRS resource set configured by the first parameter and/or the second SRS resource set configured by the second parameter includes:
in case that the network device does not configure target information for the PUSCH, the target SRS resource set including all or part of SRS resource sets in the first SRS resource set;
the target information is used for indicating at least one of the following items:
   a transmission or reception mode of the PUSCH;
   the PUSCH being associated with M-TRPs;
   the PUSCH being associated with multiple precoding and/or number of layers;
   second precoding and/or number of layers associated with the PUSCH;
   the PUSCH being associated with multiple groups of SRS resources;
   a second group of SRS resources associated with the PUSCH;
   the PUSCH being associated with multiple groups of power control parameters;
   a second group of power control parameters associated with the PUSCH;
   the PUSCH being associated with multiple *SpatialRelationInfo* parameters;
   a second group of *SpatialRelationInfo* parameters associated with the PUSCH;
   the PUSCH being associated with multiple TCI states; or
   a second group of TCI states associated with the PUSCH.

In an embodiment, the correspondence between the target SRS resource set and the first SRS resource set configured by the first parameter and/or the second SRS resource set configured by the second parameter includes:
the correspondence exists between the target SRS resource set and the first SRS resource set and/or the second SRS resource set, and a third parameter, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resources associated with the PUSCH;
a power control information associated with the PUSCH;
*SpatialRelationInfo* associated with the PUSCH; or
a TCI state associated with the PUSCH.

In an embodiment, the number of the third parameters is Y, the correspondence between the target SRS resource set and the first SRS resource set configured by the first parameter and/or the second SRS resource set configured by the second parameter includes at least one of the following items.
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set including part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
where Y is an integer equal to or greater than 2.

In an embodiment, the number of the third parameter is 1, the correspondence between the target SRS resource set and the first SRS resource set configured by the first parameter and/or the second SRS resource set configured by the second parameter includes:
the target SRS resource set being one SRS resource set satisfying a preset condition in the first SRS resource set.

In an embodiment, the first SRS resource set is an SRS resource set corresponding to DCI format 0_1; and/or
the second SRS resource set is an SRS resource set corresponding to DCI format 0_2.

In an embodiment, a maximum number of layers corresponding to the PUSCH is a maximum number of layers indicated by a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

In an embodiment, a bit width and/or an encoding mode of the SRS resource indication information is determined based on a number of SRS resources in the target SRS resource set.

It should be noted here that the above-mentioned network device according to the embodiments of the present application may implement all the method steps implemented by the above-mentioned method embodiments performed by the network device, and may achieve the same effect. The same parts and beneficial effects as the same method embodiments are not repeated in the present application.

FIG. 5 is a first schematic structural diagram of an apparatus for PUSCH transmission according to an embodiment of the present application. As shown in FIG. 5, the apparatus for PUSCH transmission may be applied in a terminal device and includes:
a first determining unit 501, used for determining a target SRS resource set based on a first SRS resource set configured by a first parameter and/or a second SRS resource set configured by a second parameter, where the target SRS resource set is one or more SRS resource sets corresponding to a PUSCH; and
transmitting the PUSCH based on the target SRS resource set.

In an embodiment, the PUSCH satisfies a first condition, and the first condition includes that:
the PUSCH is configured with target information, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, the first determining unit is further used for at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
where N is an integer equal to or greater than 2.

In an embodiment, the first determining unit is further used for at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
where M is an integer equal to or greater than 2.

In an embodiment, the first determining unit is further used for at least one of the following items:
determining the target SRS resource set based on the first SRS resource set.

In an embodiment, the apparatus further includes:
a second determining unit, used for determining a number of a third parameter corresponding to the PUSCH, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

In an embodiment, the first determining unit is further used for:
determining the target SRS resource set based on the first SRS resource set and/or the second SRS resource set, and the number of the third parameters.

In an embodiment, the number of the third parameters is X, and the first determining unit is further used for at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
where X is an integer equal to or greater than 2.

In an embodiment, the number of the third parameters is Y, and the first determining unit is further used for at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set including part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
where Y is an integer equal to or greater than 2.

In an embodiment, the number of the third parameters is 1, and the first determining unit is further used for:
determining the target SRS resource set to be one SRS resource set satisfying a preset condition in the first SRS resource set.

In an embodiment, the power control parameter includes at least one of the following items:
a parameter used for indicating a path loss reference signal;
a power control parameter *p0;* or
a path loss compensation factor *alpha.*

In an embodiment, the first SRS resource set is an SRS resource set corresponding to DCI format 0_1; and/or
the second SRS resource set is an SRS resource set corresponding to DCI format 0_2.

In an embodiment, the apparatus further includes:
a third determining unit, used for determining a maximum number of layers corresponding to the PUSCH based on a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the apparatus further includes:
a fourth determining unit, used for determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, the first indication parameter is used for indicating an SRS resource corresponding to the PUSCH, and the second indication parameter is used for indicating precoding and/or number of layers corresponding to the PUSCH.

In an embodiment, the apparatus further includes:
a fifth determining unit, used for determining a bit width and/or an encoding mode of a first indication parameter based on a number of SRS resources in the target SRS resource set, where the first indication parameter is used for indicating an SRS resource corresponding to the PUSCH.

In an embodiment, the target SRS resource set is a set including SRS resources corresponding to a transmission procedure of the PUSCH.

In an embodiment, the first SRS resource set and/or the second SRS resource set are SRS resource sets corresponding to a transmission mode of the PUSCH.

FIG. 6 is a second schematic structural diagram of an apparatus for PUSCH transmission according to an embodiment of the present application. As shown in FIG. 6, the apparatus for PUSCH transmission may be applied in a network device and includes:
a transmitting unit 601, used for transmitting SRS resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

In an embodiment, the apparatus further includes:
a configuring unit, used for configuring target information for the PUSCH, where the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

In an embodiment, the correspondence between the target SRS resource set and the first SRS resource set configured by the first parameter and/or the second SRS resource set configured by the second parameter includes at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
where M is an integer equal to or greater than 2.

In an embodiment, the correspondence between the target SRS resource set and the first SRS resource set configured by the first parameter and/or the second SRS resource set configured by the second parameter includes:
in case that the network device does not configure target information for the PUSCH, the target SRS resource set including all or part of SRS resource sets in the first SRS resource set;
the target information is used for indicating at least one of the following items:
   a transmission or reception mode of the PUSCH;
   the PUSCH being associated with M-TRPs;
   the PUSCH being associated with multiple precoding and/or number of layers;
   second precoding and/or number of layers associated with the PUSCH;
   the PUSCH being associated with multiple groups of SRS resources;
   a second group of SRS resources associated with the PUSCH;
   the PUSCH being associated with multiple groups of power control parameters;
   a second group of power control parameters associated with the PUSCH;
   the PUSCH being associated with multiple *SpatialRelationInfo* parameters;
   a second group of *SpatialRelationInfo* parameters associated with the PUSCH;
   the PUSCH being associated with multiple TCI states; or
   a second group of TCI states associated with the PUSCH.

In an embodiment, the correspondence between the target SRS resource set and the first SRS resource set configured by the first parameter and/or the second SRS resource set configured by the second parameter includes:
the correspondence exists between the target SRS resource set and the first SRS resource set and/or the second SRS resource set, and a third parameter, where the third parameter is used for indicating at least one of the following items:
a transmission or reception mode of the PUSCH;
a transmission and reception point (TRP) associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

In an embodiment, the number of the third parameters is Y, the correspondence between the target SRS resource set and the first SRS resource set configured by the first parameter and/or the second SRS resource set configured by the second parameter includes at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set including part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
where Y is an integer equal to or greater than 2.

In an embodiment, the number of the third parameters is 1, the correspondence between the target SRS resource set and the first SRS resource set configured by the first parameter and/or the second SRS resource set configured by the second parameter includes:
the target SRS resource set being one SRS resource set satisfying a preset condition in the first SRS resource set.

In an embodiment, the first SRS resource set is an SRS resource set corresponding to DCI format 0_1; and/or
the second SRS resource set is an SRS resource set corresponding to DCI format 0_2.

In an embodiment, a maximum number of layers corresponding to the PUSCH is a maximum number of layers indicated by a target parameter for number of layers, where the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

In an embodiment, the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

In an embodiment, a bit width and/or an encoding mode of the SRS resource indication information is determined based on a number of SRS resources in the target SRS resource set.

The methods and the devices provided by the embodiments of the present application are based on the same conception, the implementation of the devices and the methods may be referred to each other since the principles of the methods and the devices are similar, and are not repeated here. It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatus according to the embodiments of the present application may implement all the method steps implemented by the above-mentioned method embodiments, and may achieve the same effect. The same parts and beneficial effects as the same method embodiments are not repeated here.

An embodiment of the present application further provides a processor-readable storage medium storing a computer program that cause a processor to perform the steps of the method for PUSCH transmission described above, which, for example, includes:
determining a target SRS resource set based on a first SRS resource set configured by a first parameter and/or a second SRS resource set configured by a second parameter, where the target SRS resource set is one or more SRS resource sets corresponding to a PUSCH; and transmitting the PUSCH based on the target SRS resource set;
   or,
transmitting SRS resource indication information to a terminal device, where the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and receiving the PUSCH transmitted from the terminal device based on the SRS resource indication information.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

**1.** A method for physical uplink shared channel, PUSCH, transmission, comprising:
determining a target sounding reference signal, SRS, resource set based on a first SRS resource set configured by a first parameter and/or a second SRS resource set configured by a second parameter, wherein the target SRS resource set is one or more SRS resource sets corresponding to a PUSCH; and
transmitting the PUSCH based on the target SRS resource set.

**2.** The method of claim 1, wherein the PUSCH satisfies a first condition, and the first condition comprises that:
the PUSCH is configured with target information, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**3.** The method of claim 2, wherein determining the target SRS resource set based on the first SRS resource set configured by the first parameter and/or the second SRS resource set configured by the second parameter comprises at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
wherein N is an integer equal to or greater than 2.

**4.** The method of claim 2, wherein determining the target SRS resource set based on the first SRS resource set configured by the first parameter and/or the second SRS resource set configured by the second parameter comprises at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
wherein M is an integer equal to or greater than 2.

**5.** The method of claim 1, wherein determining the target SRS resource set based on the first SRS resource set configured by the first parameter and/or the second SRS resource set configured by the second parameter comprises:
determining the target SRS resource set based on the first SRS resource set.

**6.** The method of claim 1, further comprising:
determining a number of a third parameter corresponding to the PUSCH, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

**7.** The method of claim 6, wherein determining the target SRS resource set based on the first SRS resource set configured by the first parameter and/or the second SRS resource set configured by the second parameter comprises:
determining the target SRS resource set based on the first SRS resource set and/or the second SRS resource set, and the number of the third parameters.

**8.** The method of claim 7, wherein the number of the third parameters is X, and determining the target SRS resource set based on the first SRS resource set and/or the second SRS resource set, and the number of the third parameters comprises at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
wherein X is an integer equal to or greater than 2.

**9.** The method of claim 7, wherein the number of the third parameters is Y, and determining the target SRS resource set based on the first SRS resource set and/or the second SRS resource set, and the number of the third parameters comprises at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set comprising part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
wherein Y is an integer equal to or greater than 2.

**10.** The method of claim 7, wherein the number of the third parameters is 1, and determining the target SRS resource set based on the first SRS resource set and/or the second SRS resource set, and the number of the third parameters comprises:
determining the target SRS resource set to be one SRS resource set satisfying a preset condition in the first SRS resource set.

**11.** The method of claim 2 or 6, wherein the power control parameter comprises at least one of the following items:
a parameter used for indicating a path loss reference signal;
a power control parameter *p0;* or
a path loss compensation factor *alpha.*

**12.** The method of claim 1, wherein
the first SRS resource set is an SRS resource set corresponding to a downlink control information, DCI, format DCI format 0_1; and/or
the second SRS resource set is an SRS resource set corresponding to DCI format 0_2.

**13.** The method of any one of claims 1 to 12, further comprising:
determining a maximum number of layers corresponding to the PUSCH based on a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**14.** The method of claim 13, further comprising:
determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, wherein the first indication parameter is used for indicating an SRS resource corresponding to the PUSCH, and the second indication parameter is used for indicating precoding and/or number of layers corresponding to the PUSCH.

**15.** The method of claim 1, further comprising:
determining a bit width and/or an encoding mode of a first indication parameter based on a number of SRS resources in the target SRS resource set, wherein the first indication parameter is used for indicating an SRS resource corresponding to the PUSCH.

**16.** The method of claim 1, wherein the target SRS resource set is a set comprising SRS resources corresponding to a transmission procedure of the PUSCH.

**17.** The method of claim 1, wherein the first SRS resource set and/or the second SRS resource set are SRS resource sets corresponding to a transmission mode of the PUSCH.

**18.** A method for physical uplink shared channel, PUSCH, transmission, comprising:
transmitting sounding reference signal, SRS, resource indication information to a terminal device, wherein the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

**19.** The method of claim 18, further comprising:
configuring target information for the PUSCH, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**20.** The method of claim 19, wherein the correspondence exists between the target SRS resource set and the first SRS resource set configured by the first parameter and/or the second SRS resource set configured by the second parameter comprises at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
wherein M is an integer equal to or greater than 2.

**21.** The method of claim 18, wherein the correspondence exists between the target SRS resource set and the first SRS resource set configured by the first parameter and/or the second SRS resource set configured by the second parameter comprises:
in case that the network device does not configure target information for the PUSCH, the target SRS resource set comprising all or part of SRS resource sets in the first SRS resource set;
the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

**22.** The method of claim 18, wherein the correspondence exists between the target SRS resource set and the first SRS resource set configured by the first parameter and/or the second SRS resource set configured by the second parameter comprises:
the correspondence exists between the target SRS resource set and the first SRS resource set and/or the second SRS resource set, and a third parameter, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

**23.** The method of claim 22, wherein the number of the third parameters is Y, the correspondence exists between the target SRS resource set and the first SRS resource set configured by the first parameter and/or the second SRS resource set configured by the second parameter comprises at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set comprising part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
wherein Y is an integer equal to or greater than 2.

**24.** The method of claim 22, wherein the number of the third parameters is 1, the correspondence exists between the target SRS resource set and the first SRS resource set configured by the first parameter and/or the second SRS resource set configured by the second parameter comprises:
the target SRS resource set being one SRS resource set satisfying a preset condition in the first SRS resource set.

**25.** The method of claim 18, wherein
the first SRS resource set is an SRS resource set corresponding to a downlink control information, DCI, format DCI format 0_1; and/or
the second SRS resource set is an SRS resource set corresponding to DCI format 0_2.

**26.** The method of any one of claims 18 to 25, wherein a maximum number of layers corresponding to the PUSCH is a maximum number of layers indicated by a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**27.** The method of claim 26, wherein the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

**28.** The method of claim 18, wherein a bit width and/or an encoding mode of the SRS resource indication information is determined based on a number of SRS resources in the target SRS resource set.

**29.** A terminal device, comprising a memory, a transceiver and a processor,
wherein the memory is used for storing a computer program; the transceiver is used for transmitting and receiving data under control of the processor; and the processor is used for reading the computer program in the memory and performing the following operations:
determining a target sounding reference signal, SRS, resource set based on a first SRS resource set configured by a first parameter and/or a second SRS resource set configured by a second parameter, wherein the target SRS resource set is one or more SRS resource sets corresponding to a PUSCH; and
transmitting the PUSCH based on the target SRS resource set.

**30.** The terminal device of claim 29, wherein the PUSCH satisfies a first condition, and the first condition comprises that:
the PUSCH is configured with target information, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**31.** The terminal device of claim 30, wherein determining the target SRS resource set based on the first SRS resource set configured by the first parameter and/or the second SRS resource set configured by the second parameter comprises at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
wherein N is an integer equal to or greater than 2.

**32.** The terminal device of claim 30, wherein determining the target SRS resource set based on the first SRS resource set configured by the first parameter and/or the second SRS resource set configured by the second parameter comprises at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
wherein M is an integer equal to or greater than 2.

**33.** The terminal device of claim 29, wherein determining the target SRS resource set based on the first SRS resource set configured by the first parameter and/or the second SRS resource set configured by the second parameter comprises:
determining the target SRS resource set based on the first SRS resource set.

**34.** The terminal device of claim 29, wherein the operations further comprise:
determining a number of a third parameter corresponding to the PUSCH, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

**35.** The terminal device of claim 34, wherein determining the target SRS resource set based on the first SRS resource set configured by the first parameter and/or the second SRS resource set configured by the second parameter comprises:
determining the target SRS resource set based on the first SRS resource set and/or the second SRS resource set, and the number of the third parameters.

**36.** The terminal device of claim 35, wherein the number of the third parameters is X, and determining the target SRS resource set based on the first SRS resource set and/or the second SRS resource set, and the number of the third parameters comprises at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
wherein X is an integer equal to or greater than 2.

**37.** The terminal device of claim 35, wherein the number of the third parameters is Y, and determining the target SRS resource set based on the first SRS resource set and/or the second SRS resource set, and the number of the third parameters comprises at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set comprising part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
wherein Y is an integer equal to or greater than 2.

**38.** The terminal device of claim 35, wherein the number of the third parameters is 1, and determining the target SRS resource set based on the first SRS resource set and/or the second SRS resource set, and the number of the third parameters comprises:
determining the target SRS resource set to be one SRS resource set satisfying a preset condition in the first SRS resource set.

**39.** The terminal device of claim 30 or 34, wherein the power control parameter comprises at least one of the following items:
a parameter used for indicating a path loss reference signal;
a power control parameter *p0;* or
a path loss compensation factor *alpha.*

**40.** The terminal device of claim 29, wherein
the first SRS resource set is an SRS resource set corresponding to the downlink control information, DCI, format DCI format 0_1; and/or
the second SRS resource set is an SRS resource set corresponding to DCI format 0_2.

**41.** The terminal device of any one of claims 29 to 40, wherein the operations further comprise:
determining a maximum number of layers corresponding to the PUSCH based on a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**42.** The terminal device of claim 41, wherein the operations further comprise:
determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, wherein the first indication parameter is used for indicating an SRS resource corresponding to the PUSCH, and the second indication parameter is used for indicating precoding and/or number of layers corresponding to the PUSCH.

**43.** The terminal device of claim 29, wherein
determining a bit width and/or an encoding mode of a first indication parameter based on a number of SRS resources in the target SRS resource set, wherein the first indication parameter is used for indicating an SRS resource corresponding to the PUSCH.

**44.** The terminal device of claim 29, wherein the target SRS resource set is a set comprising SRS resources corresponding to a transmission procedure of the PUSCH.

**45.** The terminal device of claim 29, wherein the first SRS resource set and/or the second SRS resource set are SRS resource sets corresponding to a transmission mode of the PUSCH.

**46.** A network device, comprising a memory, a transceiver and a processor,
wherein the memory is used for storing a computer program; the transceiver is used for transmitting and receiving data under control of the processor; and the processor is used for reading the computer program in the memory and performing the following operations:
transmitting sounding reference signal, SRS, resource indication information to a terminal device, wherein the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

**47.** The network device of claim 46, wherein the operations further comprise:
configuring target information for the PUSCH, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**49.** The network device of claim 47, wherein the correspondence exists between the target SRS resource set and the first SRS resource set configured by the first parameter and/or the second SRS resource set configured by the second parameter comprises at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
wherein M is an integer equal to or greater than 2.

**49.** The network device of claim 46, wherein the correspondence exists between the target SRS resource set and the first SRS resource set configured by the first parameter and/or the second SRS resource set configured by the second parameter comprises:
in case that the network device does not configure target information for the PUSCH, the target SRS resource set comprising all or part of SRS resource sets in the first SRS resource set;
the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

**50.** The network device of claim 46, wherein the correspondence exists between the target SRS resource set and the first SRS resource set configured by the first parameter and/or the second SRS resource set configured by the second parameter comprises:
the correspondence exists between the target SRS resource set and the first SRS resource set and/or the second SRS resource set, and a third parameter, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

**51.** The network device of claim 50, wherein the number of the third parameters is Y, the correspondence exists between the target SRS resource set and the first SRS resource set configured by the first parameter and/or the second SRS resource set configured by the second parameter comprises at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set comprising part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
wherein Y is an integer equal to or greater than 2.

**52.** The network device of claim 50, wherein the number of the third parameters is 1, the correspondence exists between the target SRS resource set and the first SRS resource set configured by the first parameter and/or the second SRS resource set configured by the second parameter comprises:
the target SRS resource set being one SRS resource set satisfying a preset condition in the first SRS resource set.

**53.** The network device of claim 46, wherein
the first SRS resource set is an SRS resource set corresponding to a downlink control information, DCI, format DCI format 0_1; and/or
the second SRS resource set is an SRS resource set corresponding to DCI format 0_2.

**54.** The network device of any one of claims 46 to 53, wherein a maximum number of layers corresponding to the PUSCH is a maximum number of layers indicated by a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**55.** The network device of claim 54, wherein the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

**56.** The network device of claim 46, wherein a bit width and/or an encoding mode of the SRS resource indication information is determined based on a number of SRS resources in the target SRS resource set.

**57.** An apparatus for physical uplink shared channel, PUSCH, transmission, comprising:
a first determining unit, used for determining a target sounding reference signal, SRS, resource set based on a first SRS resource set configured by a first parameter and/or a second SRS resource set configured by a second parameter, wherein the target SRS resource set is one or more SRS resource sets corresponding to a PUSCH; and
transmitting the PUSCH based on the target SRS resource set.

**58.** The apparatus of claim 57, wherein the PUSCH satisfies a first condition, and the first condition comprises that:
the PUSCH is configured with target information, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**59.** The apparatus of claim 58, wherein the first determining unit is further used for at least one of the following items:
in case that a number of the first SRS resource sets is N, determining the target SRS resource set based on the first SRS resource set;
in case that a number of the first SRS resource sets is 1 and a number of the second SRS resource sets is N, determining the target SRS resource set based on the second SRS resource set;
in case that a number of the first SRS resource sets is 1 and a number of the second SRS resource sets is 1, determining the target SRS resource set based on the first SRS resource set; or
in case that a number of the first SRS resource sets is 1 and a number of the second SRS resource sets is 1, not expecting a network device to configure the target information,
wherein N is an integer equal to or greater than 2.

**60.** The apparatus of claim 58, wherein the first determining unit is further used for at least one of the following items:
in case that a number of the first SRS resource sets is M, determining the target SRS resource set to be one or M SRS resource sets in the first SRS resource set;
in case that a number of the first SRS resource sets is 1 and a number of the second SRS resource sets is M, determining the target SRS resource set to be M SRS resource sets in the second SRS resource set or one SRS resource set in the first SRS resource set;
in case that a number of the first SRS resource sets is 1 and a number of the second SRS resource sets is 1, determining the target SRS resource set to be one SRS resource set in the first SRS resource set; or
in case that a number of the first SRS resource sets is 1 and a number of the second SRS resource sets is 1, not expecting a network device to configure the target information,
wherein M is an integer equal to or greater than 2.

**61.** The apparatus of claim 57, wherein the first determining unit is further used for:
determining the target SRS resource set based on the first SRS resource set.

**62.** The apparatus of claim 57, further comprising:
a second determining unit, used for determining a number of a third parameter corresponding to the PUSCH, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control parameter associated with the PUSCH;
*SpatialRelationInfo* associated with the PUSCH; or
a TCI state associated with the PUSCH.

**63.** The apparatus of claim 62, wherein the first determining unit is further used for:
determining the target SRS resource set based on the first SRS resource set and/or the second SRS resource set, and the number of the third parameters.

**64.** The apparatus of claim 63, wherein the number of the third parameters is X, the first determining unit is further used for at least one of the following items:
in case that the number of the first SRS resource sets is greater than X, determining the target SRS resource set based on the first SRS resource set;
in case that the number of the first SRS resource sets is equal to X, determining the target SRS resource set based on the first SRS resource set;
in case that the number of the first SRS resource sets is less than X, determining the target SRS resource set based on SRS resources in the first SRS resource set and SRS resources other than the first SRS resource set;
in case that the number of the first SRS resource sets is less than X and the number of the second SRS resource sets is greater than X, determining the target SRS resource set based on the second SRS resource set;
in case that the number of the first SRS resource sets is less than X and the number of the second SRS resource sets is equal to X, determining the target SRS resource set based on the second SRS resource set; or
in case that the number of the second SRS resource sets is less than X and the number of the first SRS resource sets is less than X, determining the target SRS resource set based on the first SRS resource set,
wherein X is an integer equal to or greater than 2.

**65.** The apparatus of claim 63, wherein the number of the third parameters is Y, the first determining unit is further used for at least one of the following items:
in case that the number of the first SRS resource sets is greater than Y, determining the target SRS resource set to be Y SRS resource sets in the first SRS resource set;
in case that the number of the first SRS resource sets is equal to Y, determining the target SRS resource set to be Y SRS resource sets in the first SRS resource set;
in case that the number of the first SRS resource sets is less than Y, determining the target SRS resource set to be a set comprising part or all of SRS resources in the first SRS resource set and SRS resources other than the first SRS resource set;
in case that the number of the first SRS resource sets is less than Y and the number of the second SRS resource sets is greater than Y, determining the target SRS resource set to be Y SRS resource sets in the second SRS resource set;
in case that the number of the first SRS resource sets is less than Y and the number of the second SRS resource sets is equal to Y, determining the target SRS resource set to be Y SRS resource sets in the second SRS resource set;
in case that the number of the first SRS resource sets is less than Y and the number of the second SRS resource sets is less than Y, determining the target SRS resource set to be the first SRS resource set; or
in case that the number of the first SRS resource sets is less than Y and the number of the second SRS resource sets is less than Y, not expecting a network device to configure the number of the third parameters to be Y,
wherein Y is an integer equal to or greater than 2.

**66.** The apparatus of claim 63, wherein the number of the third parameters is 1, the first determining unit is further used for:
determining the target SRS resource set to be one SRS resource set satisfying a preset condition in the first SRS resource set.

**67.** The apparatus of claim 58 or 62, wherein the power control parameter comprises at least one of the following items:
a parameter used for indicating a path loss reference signal;
a power control parameter *p0*; or
a path loss compensation factor *alpha.*

**68.** The apparatus of claim 57, wherein:
the first SRS resource set is an SRS resource set corresponding to a downlink control information, DCI, format DCI format 0_1; and/or
the second SRS resource set is an SRS resource set corresponding to DCI format 0_2.

**69.** The apparatus of any one of claims 57 to 68, further comprising:
a third determining unit, used for determining a maximum number of layers corresponding to the PUSCH based on a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**70.** The apparatus of claim 69, further comprising:
a fourth determining unit, used for determining a bit width and/or an encoding mode of a first indication parameter based on a maximum number of layers indicated by the target parameter for number of layers, and/or determining a bit width and/or an encoding mode of a second indication parameter based on a maximum number of layers indicated by the target parameter for number of layers, the first indication parameter is used for indicating an SRS resource corresponding to the PUSCH, and the second indication parameter is used for indicating precoding and/or number of layers corresponding to the PUSCH.

**71.** The apparatus of claim 57, further comprising:
a fifth determining unit, used for determining a bit width and/or an encoding mode of a first indication parameter based on a number of SRS resources in the target SRS resource set, wherein the first indication parameter is used for indicating an SRS resource corresponding to the PUSCH.

**72.** The apparatus of claim 57, wherein the target SRS resource set is a set comprising SRS resources corresponding to a transmission procedure of the PUSCH.

**73.** The apparatus of claim 57, wherein the first SRS resource set and/or the second SRS resource set are SRS resource sets corresponding to a transmission mode of the PUSCH.

**74.** An apparatus for physical uplink shared channel, PUSCH, transmission, comprising:
a transmitting unit, used for transmitting sounding reference signal, SRS, resource indication information to a terminal device, wherein the SRS resource indication information is used for indicating an SRS resource corresponding to PUSCH transmission from a target SRS resource set, and a correspondence exists between the target SRS resource set and a first SRS resource set configured by a first parameter and/or a second SRS resource set configured by a second parameter; and
receiving the PUSCH transmitted from the terminal device based on the SRS resource indication information.

**75.** The apparatus of claim 74, further comprising:
a configuring unit, used for configuring target information for the PUSCH, wherein the target information is used for indicating at least one of the following items:
a transmission or reception mode of the PUSCH;
the PUSCH being associated with multiple-transmission and reception points, M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple transmission configuration indicator, TCI, states; or
a second group of TCI states associated with the PUSCH.

**76.** The apparatus of claim 75, wherein the correspondence exists between the target SRS resource set and the first SRS resource set configured by the first parameter and/or the second SRS resource set configured by the second parameter comprises at least one of the following items:
in case that a number of the first SRS resource sets is M, the target SRS resource set being one or M SRS resource sets in the first SRS resource set;
in case that a number of the first SRS resource sets is 1 and a number of the second SRS resource sets is M, the target SRS resource set being M SRS resource sets in the second SRS resource set or one SRS resource set in the first SRS resource set; or
in case that a number of the first SRS resource sets is 1 and a number of the second SRS resource sets is 1, the target SRS resource set being one SRS resource set in the first SRS resource set,
wherein M is an integer equal to or greater than 2.

**77.** The apparatus of claim 74, wherein the correspondence exists between the target SRS resource set and the first SRS resource set configured by the first parameter and/or the second SRS resource set configured by the second parameter comprises:
in case that the network device does not configure target information for the PUSCH, the target SRS resource set comprising all or part of SRS resource sets in the first SRS resource set;
the target information is used for indicating at least one of the following items:
a transmission or reception mode of the PUSCH;
the PUSCH being associated with M-TRPs;
the PUSCH being associated with multiple precoding and/or number of layers;
second precoding and/or number of layers associated with the PUSCH;
the PUSCH being associated with multiple groups of SRS resources;
a second group of SRS resources associated with the PUSCH;
the PUSCH being associated with multiple groups of power control parameters;
a second group of power control parameters associated with the PUSCH;
the PUSCH being associated with multiple *SpatialRelationInfo* parameters;
a second group of *SpatialRelationInfo* parameters associated with the PUSCH;
the PUSCH being associated with multiple TCI states; or
a second group of TCI states associated with the PUSCH.

**78.** The apparatus of claim 74, wherein the correspondence exists between the target SRS resource set and the first SRS resource set configured by the first parameter and/or the second SRS resource set configured by the second parameter comprises:
the correspondence exists between the target SRS resource set and the first SRS resource set and/or the second SRS resource set, and a third parameter, wherein the third parameter is used for indicating at least one of the following items:
a transmission or reception mode of the PUSCH;
a transmission and reception point, TRP, associated with the PUSCH;
precoding and/or number of layers associated with the PUSCH;
an SRS resource associated with the PUSCH;
a power control information associated with the PUSCH;
*SpatialRelationInfo* associated with the PUSCH; or
a TCI state associated with the PUSCH.

**79.** The apparatus of claim 78, wherein the number of the third parameters is Y, the correspondence exists between the target SRS resource set and the first SRS resource set configured by the first parameter and/or the second SRS resource set configured by the second parameter comprises at least one of the following items:
in case that the number of the first SRS resource sets is greater than Y, the target SRS resource set being Y SRS resource sets in the first SRS resource set;
in case that the number of the first SRS resource sets is equal to Y, the target SRS resource set being Y SRS resource sets in the first SRS resource set;
in case that the number of the first SRS resource sets is less than Y, the target SRS resource set being a set comprising part or all of SRS resources in the first SRS resource set and SRS resources other than the first SRS resource set;
in case that the number of the first SRS resource sets is less than Y and the number of the second SRS resource sets is greater than Y, the target SRS resource set being Y SRS resource sets in the second SRS resource set;
in case that the number of the first SRS resource sets is less than Y and the number of the second SRS resource sets is equal to Y, the target SRS resource set being Y SRS resource sets in the second SRS resource set; or
in case that the number of the first SRS resource sets is less than Y and the number of the second SRS resource sets is less than Y, the target SRS resource set being the first SRS resource set,
wherein Y is an integer equal to or greater than 2.

**80.** The apparatus of claim 78, wherein the number of the third parameters is 1, the correspondence exists between the target SRS resource set and the first SRS resource set configured by the first parameter and/or the second SRS resource set configured by the second parameter comprises:
the target SRS resource set being one SRS resource set satisfying a preset condition in the first SRS resource set.

**81.** The apparatus of claim 74, wherein:
the first SRS resource set is an SRS resource set corresponding to a downlink control information, DCI, format DCI format 0_1; and/or
the second SRS resource set is an SRS resource set corresponding to DCI format 0_2.

**82.** The apparatus of any one of claims 74 to 81, wherein a maximum number of layers corresponding to the PUSCH is a maximum number of layers indicated by a target parameter for number of layers, wherein the target parameter for number of layers is a first parameter for number of layers or a second parameter for number of layers, the first parameter for number of layers is used for indicating a maximum number of layers corresponding to DCI format 0_1 and the second parameter for number of layers is used for indicating a maximum number of layers corresponding to DCI format 0_2.

**83.** The apparatus of claim 82, wherein the maximum number of layers indicated by the target parameter for number of layers is used for determining a bit width and/or an encoding mode of a first indication parameter, and/or the maximum number of layers indicated by the target parameter for number of layers is used for determining a bit width and/or an encoding mode of a second indication parameter, the first indication parameter is used for indicating an SRS resource corresponding to the PUSCH, and the second indication parameter is used for indicating precoding and/or number of layers corresponding to the PUSCH.

**84.** The apparatus of claim 74, wherein a bit width and/or an encoding mode of the SRS resource indication information is determined based on a number of SRS resources in the target SRS resource set.

**85.** A computer readable storage medium storing a computer program that causes, a computer to perform the method of any one of claims 1 to 17 or perform the method of any one of claims 18 to 28.
